# EUROPÄISCHE PATENTSCHRIFT

(11) **EP 1 567 902 B1**
(45) Veröffentlichungstag und Bekanntmachung des Hinweises auf die Patenterteilung: **20.02.2008**
(21) Anmeldenummer: 03776905.6
(22) Anmeldetag: 14.11.2003
(51) Int. Cl.: G02B 6/44

(54) **VORRICHTUNG ZUR STRUKTURIERTEN ABLAGE BZW. HANDHABUNG VON LICHTWELLENLEITERN**
DEVICE FOR THE STRUCTURED STORAGE OR HANDLING OF OPTICAL WAVEGUIDES
DISPOSITIF PERMETTANT DE MANIPULER OU DE STOCKER DE MANIERE STRUCTUREE DES GUIDES D'ONDES OPTIQUES

(30) Priorität: 26.11.2002 DE 10255291; 29.03.2003 DE 10314262
(43) Veröffentlichungstag der Anmeldung: 31.08.2005
(60) Teilanmeldung: 07025079.0
(73) Patentinhaber: CCS Technology, Inc., Wilmington, DE 19803 (US)
(72) Erfinder: LAPP, Oliver, 42399 Wuppertal (DE)
(74) Vertreter: Sturm, Christoph
(86) Internationale Anmeldenummer: PCT/EP2003/012759
(87) Internationale Veröffentlichungsnummer: WO 2004/051337

(56) Entgegenhaltungen:
- EP-B- 1 095 303
- WO-A-00/65397
- WO-A-90/15351
- US-A- 5 751 882
- US-A- 6 009 225
- US-B1- 6 304 707
- US-B1- 6 418 265
- PATENT ABSTRACTS OF JAPAN Bd. 1999, Nr. 12, 29. Oktober 1999 (1999-10-29) & JP 11 202136 A (SIECOR CORP), 30. Juli 1999 (1999-07-30)

## Beschreibung

Die Erfindung betrifft eine Vorrichtung zur strukturierten Ablage bzw. Handhabung von Lichtwellenleitern, insbesondere von Lichtwellenleiter-Spleißverbindungen, gemäß dem Oberbegriff des Patentanspruchs 1.

Vorrichtung zur strukturierten Ablage bzw. Handhabung von Lichtwellenleitem bzw. von Lichtwellenleiter-Spleißverbindungen, nämlich Kabelmuffen, werden in Lichtwellenleiterkabelnetzen zum Schutz von Spleißverbindungen an Verbindungsstellen von zwei Lichtwellenleiterkabeln sowie zum Schutz der Lichtwellenleiter bzw. Lichtwellenleiterfasern an Abzweigstellen oder Aufteilungsstellen von Lichtwellenleiterkabeln verwendet. Dabei müssen die Kabelmuffen die Kontinuität der Lichtwellenleiterkabel so gewährleisten, als wären die Lichtwellenleiterkabel nicht unterbrochen. Der strukturierten Ablage und schonenden Handhabung der Lichtwellenteiterfasern oder der Lichtwellenleiter-Spleißverbindungen kommt hierbei eine entscheidenden Rolle zu, damit die Übertragungseigenschaften der Lichtwellenleiterfasern nicht negativ beeinträchtigt werden.

Aus dem Stand der Technik sind eine Vielzahl von Kabelmuffen bekannt. Als Stand der Technik kann zum Beispiel auf die EP 1 095 303 B1 verwiesen werden. In diesem Dokument ist eine als Haubenmuffe ausgebildete Vorrichtung zur strukturierten Ablage bzw. Handhabung von Lichtwellenleitern, nämlich von Lichtwellenleiter-Spleißverbindungen, bekannt.

Hinsichtlich weiteren Standes der Technik wird auf die US-B-6 304 707, auf die US-A- 6 009 225, auf die US-A-5 751 882, auf die WO 90/15351 A sowie auf die WO 00/65397 A verwiesen.

Hiervon ausgehend liegt der vorliegenden Erfindung das Problem zu Grunde, eine neuartige Vorrichtung zur strukturierten Ablage bzw. Handhabung von Lichtwellenleitern, insbesondere von Lichtwellenleiter-Spleißverbindungen, zu schaffen.

Dieses Problem wird dadurch gelöst, dass die Eingangs genannte Vorrichtung zur strukturierten Ablage bzw. Handhabung von Lichtwellenleitern, insbesondere von Lichtwellenleiter-Spleißverbindungen, durch die Merkmale des kennzeichnenden Teils des Patentanspruchs 1 weitergebildet ist.

Erfindungsgemäß sind mindestens an einer vertikal verlaufenden Schmalseite des Rahmens Faserführungselemente für Lichtwellenleiterfasern befestigt, derart, dass die Lichtwellenleiterfasern im Bereich der oder jeder Schmalseite seitlich neben den Spleißkassetten bzw. seitlich neben dem Rahmen geführt sind, wobei die im Bereich der oder jeder Schmalseite angeordneten Faserführungselemente mindestens zwei vertikal verlaufende Führungskanäle für Lichtwellenleiterfasern bilden, wobei ein erster Führungskanal der Vorderseite des Rahmens und ein zweiter Führungskanal der Rückseite des Rahmens zugeordnet ist, wobei die beiden Führungskanäle durch mindestens eine vertikal verlaufende Trennwand räumlich voneinander getrennt sind, und wobei die oder jede Trennwand in einem unteren Abschnitt derselben einen Durchbruch aufweist, sodass die Lichtwellenleiterfasern von dem ersten Führungskanal in den zweiten Führungskanal und damit von der Vorderseite des Rahmens zur Rückseite des Rahmens umgeleitet werden können.

Vorzugsweise ist jeder der Führungskanäle ist in jeweils zwei Teilführungskanäle unterteilt, derart, dass sich im Bereich der Vorderseite des Rahmens und im Bereich der Rückseite des Rahmens jeweils mindestens zwei vertikal verlaufende Teilführungskanäle erstrecken, nämlich jeweils mindestens ein innenliegender Teilführungskanal und mindestens ein außenliegender Teilführungskanal. Dies ermöglicht eine besonders strukturierte Handhabung der Lichtwellenleiterfasern.

Die im Bereich der Vorderseite und die im Bereich der Rückseite des Rahmens verlaufenden Teilführungskanäle, also der innenliegende Teilführungskanal und der außenliegende Teilführungskanal, sind durch mehrere voneinander beabstandete Trennstege voneinander getrennt, wobei zwischen zwei benachbarten Trennstegen jeweils ein Durchbruch ausgebildet ist, derart, dass die Lichtwellenleiterfasern im Bereich der Vorderseite und im Bereich der Rückseite des Rahmens von dem jeweiligen innenliegenden Teilführungskanal in den jeweiligen außenliegenden Teilführungskanal umgeleitet werden können.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, anhand der Zeichnung näher erläutert. In der Zeichnung zeigt:
- Fig.1:: eine als Haubenmuffe ausgebildete, erfindungsgemäße Vorrichtung zur strukturierten Ablage bzw. Handhabung von Lichtwellenleiter-Spleißverbindungen ohne die Abdeckungshaube in perspektivischer Vorderansicht nach einem ersten Ausführungsbeispiel der Erfindung,
- Fig. 2:: einen an einem Dichtungskörper montierten Rahmen der Haubenmuffe gemäß Fig. 1 in perspektivischer Vorderansicht,
- Fig. 3:: eine vergrößertes Detail des Rahmens der Fig. 1 mit am Rahmen befestigten Halterungen für Spleißkassetten in perspektivischer Vorderansicht,
- Fig. 4:: das Detail der Fig. 3 mit zusätzlich am Rahmen montierten Faserführungselementen in perspektivischer Vorderansicht,
- Fig. 5:: das Detail der Fig. 4 mit zusätzlich am Rahmen montierten Bündeladerführungselementen in perspektivischer Vorderansicht,
- Fig. 6:: das Detail der Fig. 5 mit zusätzlich am Rahmen montierten Spleißkassetten in perspektivischer Vorderansicht,
- Fig.7:: einen Ausschnitt aus der als Haubenmuffe ausgebildeten, erfindungsgemäßen Vorrichtung zur strukturierten Ablage von Lichtwellenleiter-Spleißverbindungen gemäß Fig. 1 bis 6 in Seitenansicht,
- Fig. 8:: ein Detail analog zu der Fig. 6 zusammen mit in der Haubenmuffe geführten Bündeladern und Lichtwellenleiterfasern in perspektivischer Vorderansicht,
- Fig. 9:: ein Detail der Fig. 7 im Bereich vertikaler Führungskanäle für Lichtwellenleiterfasern in perspektivischer Seitenansicht,
- Fig. 10:: eine Spleißkassette der als Haubenmuffe ausgebildeten, erfindungsgemäßen Vorrichtung zur strukturierten Ablage von Lichtwellenleiter-Spleißverbindungen gemäß Fig. 1 bis 9 in perspektivischer Draufsicht,
- Fig. 11:: die Spleißkassette der Fig. 10 in Draufsicht,
- Fig. 12:: die Spleißkassette der Fig. 10 und 11 in Draufsicht mit einer Visualisierung möglicher Faserführungen innerhalb der Spleißkassette in Draufsicht,
- Fig. 13:: die Visualisierung möglicher Faserführungen gemäß Fig. 12 in Alleindarstellung,
- Fig. 14:: ein weiteres Detail der als Haubenmuffe ausgebildeten, erfindungsgemäßen Vorrichtung zur strukturierten Ablage von Lichtwellenleiter-Spleißverbindungen gemäß Fig. 1 bis 13 zur Verdeutlichung der Faserführung in perspektivischer Vorderansicht,
- Fig. 15:: das Detail der Fig. 14 mit einer alternativen Faserführung innerhalb einer Spleißkassette in perspektivischer Vorderansicht,
- Fig. 16:: das Detail der Fig. 14 und 15 mit einer alternativen Faserführung innerhalb einer Spleißkassette in perspektivischer Vorderansicht,
- Fig. 17:: einen vergrößerten Ausschnitt aus dem Detail der Fig. 14 bis 16 in perspektivischer Vorderansicht,
- Fig. 18:: das Detail der Fig. 17 mit einer Faserführung,
- Fig. 19:: einen vergrößerten Ausschnitt aus dem Detail der Fig. 14 bis 16 in Seitenansicht,
- Fig. 20:: einen vergrößerten Ausschnitt aus dem Detail der Fig. 14 bis 16 in perspektivischer Draufsicht,
- Fig. 21:: die als Haubenmuffe ausgebildete, erfindungsgemäße Vorrichtung zur strukturierten Ablage von Lichtwellenleiter-Spleißverbindungen gemäß Fig. 1 bis 20 mit einer herausgezogenen Schublade zur Ablage ungeschnittener Bündeladern in perspektivischer Vorderansicht analog zur Fig. 1,
- Fig. 22:: die Vorrichtung gemäß Fig. 21 mit einer Verdeutlichung der Führung der ungeschnittenen Bündeladern innerhalb der herausgezogenen Schublade in perspektivischer Vorderansicht,
- Fig. 23:: einen Ausschnitt aus einer als Haubenmuffe ausgebildeten, erfindungsgemäßen Vorrichtung zur strukturierten Ablage bzw. Handhabung von Lichtwellenleiter-Spleißverbindungen ohne die Abdeckungshaube nach einem zweiten Ausführungsbeispiel der Erfindung in perspektivischer Vorderansicht,
- Fig. 24:: einen Ausschnitt aus der Vorrichtung gemäß Fig. 23 mit teilweise heruntergeklappten Spleißkassetten,
- Fig. 25:: einen Ausschnitt aus der als Haubenmuffe ausgebildeten, erfindungsgemäßen Vorrichtung zur strukturierten Ablage von Lichtwellenleiter-Spleißverbindungen gemäß Fig. 23 bis 24 in Seitenansicht,
- Fig. 26:: eine Spleißkassette der als Haubenmuffe ausgebildeten, erfindungsgemäßen Vorrichtung zur strukturierten Ablage von Lichtwellenleiter-Spleißverbindungen gemäß Fig. 23 bis 25 in perspektivischer Draufsicht,
- Fig. 27:: einen vergrößerten Ausschnitt aus dem Detail der Fig. 24 in perspektivischer Vorderansicht,
- Fig. 28:: einen anderen vergrößerten Ausschnitt aus dem Detail der Fig. 24 in perspektivischer Vorderansicht zusammen mit einer Lichtwellenleiterfaser,
- Fig. 29:: das Detail gemäß Fig. 28 in vergrößerter Darstellung,
- Fig. 30:: einen vergrößerten Ausschnitt aus dem Detail der Fig. 28 bis 29 in perspektivischer Draufsicht,
- Fig. 31:: eine Darstellung der erfindungsgemäßen Vorrichtung zur strukturierten Ablage von Lichtwellenleiter-Spleißverbindungen gemäß Fig. 23 bis 30 mit Spleißkassetten unterschiedlicher Dicke, und
- Fig. 32:: ein weiteres Detail der Vorrichtung zur strukturierten Ablage von Lichtwellenleiter-Spleißverbindungen gemäß Fig. 23 bis 31 im Bereich der Bündeladerführung.

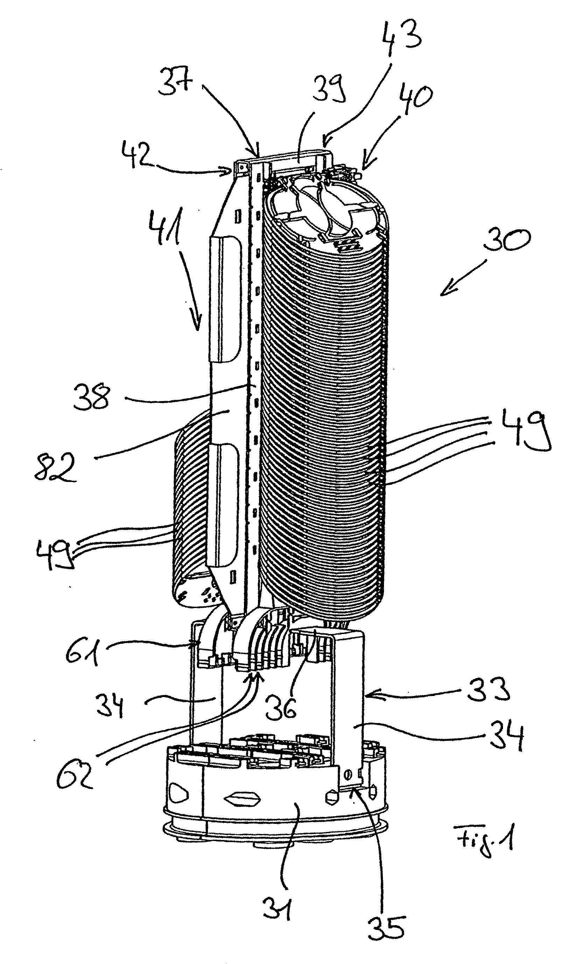

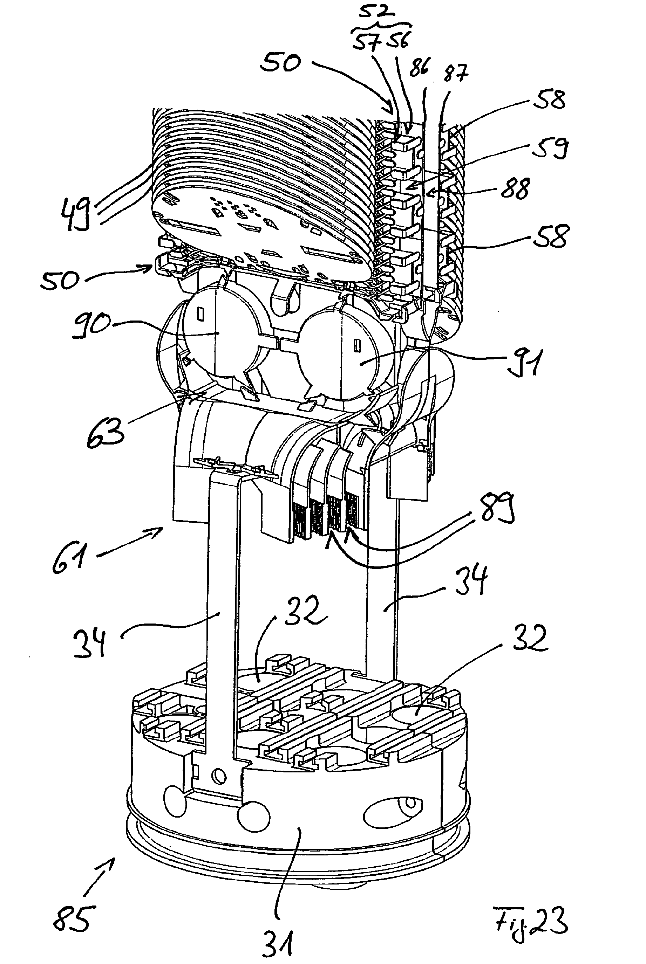

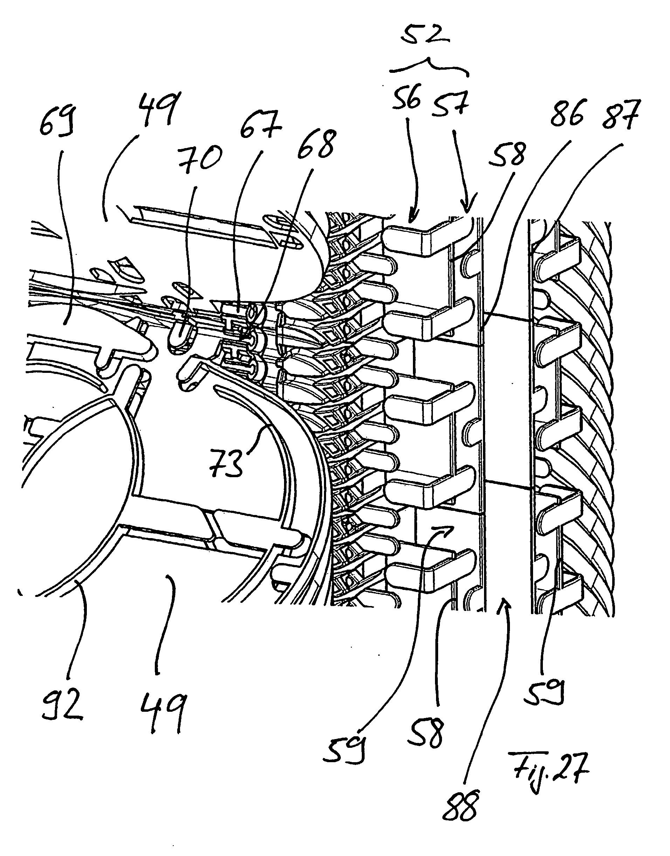

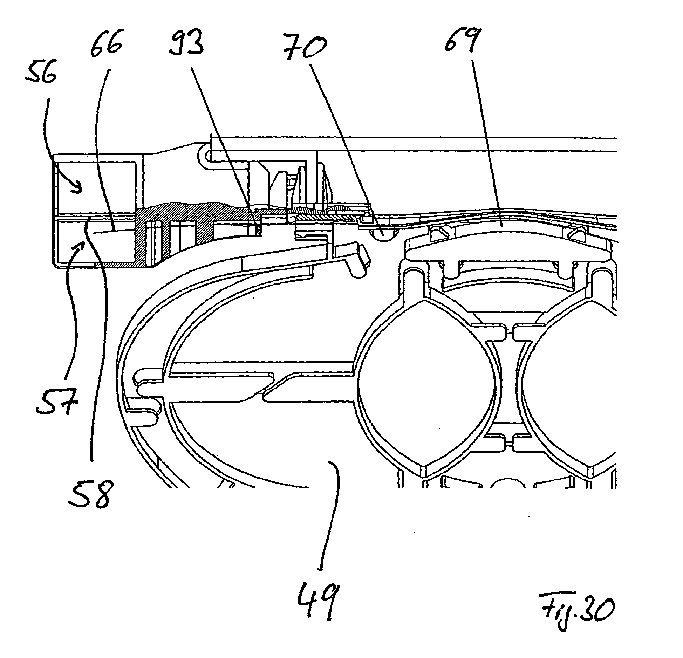

Unter Bezugnahme auf die Figuren 1 bis 32 wird nachfolgend die Erfindung anhand einer als Haubenmuffe ausgebildeten Vorrichtung zur strukturierten Ablage bzw. Handhabung von Lichtwellenleitern, nämlich von Lichtwellenleiter-Spleißverbindungen, im Detail beschrieben. Fig. 1 bis 22 betreffen ein erstes Ausführungsbeispiel der Erfindung, Fig. 23 bis 32 betreffen eine zweite Ausführungsform der erfindungsgemäßen Haubenmuffe. Obwohl die Erfindung bei Haubenmuffen besonders vorteilhaft verwendet werden kann, ist die Erfindung auch bei anderen Muffentypen, zum Beispiel bei sogenannten Inline-Muffen, verwendbar.

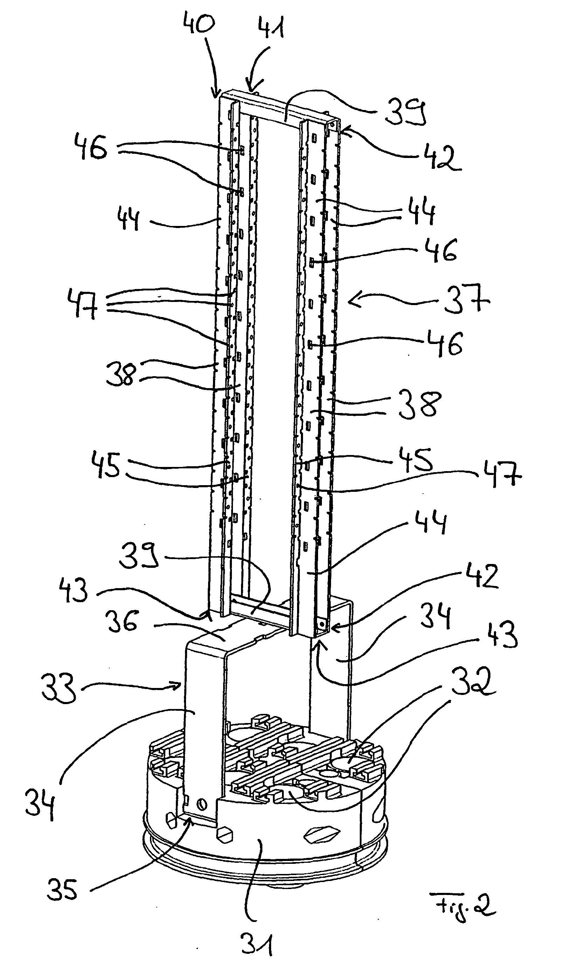

Zuerst wird das Ausführungsbeispiel gemäß Fig. 1 bis 22 beschrieben. So zeigt Fig. 1 eine erfindungsgemäße Haubenmuffe 30 mit demontierter Abdeckungshaube. Bei einer derartigen Haubenmuffe 30 werden nicht-dargestellte Lichtwellenleiterkabel von unten in die Haubenmuffe 30 eingeführt. Die Einführung der Lichtwellenteiterkabei in die Haubenmuffe 30 erfolgt über einen Dichtungskörper 31. In den Dichtungskörper 31 sind Öffnungen 32 (siehe insbesondere Fig. 2) eingebracht, durch welche die miteinander zu verspleißenden Lichtwellenleiterkabel in die Haubenmuffe 30 eingeführt werden. Die Öffnungen 32 zum Einführen der Lichtwellenleiterkabel in die Haubenmuffe 30 funktionieren nach dem Prinzip von Stopfbuchsen. Der Aufbau und die Funktionsweise solcher Dichtungskörper 31 ist dem hier angesprochenen Fachmann geläufig und bedarf daher keiner näheren Erläuterung.

Am Dichtungskörper 31 ist ein U-förmiger Bügel 33 befestigt. Der U-förmige Bügel 33 greift mit zwei vertikal verlaufenden Schenkel 34, nämlich mit Endabschnitten dieser Schenkel 34, in seitliche Ausnehmungen 35 des Dichtungskörpers 31 ein. Die beiden vertikal verlaufenden Schenkel 34 des Bügels 33 sind durch einen horizontal verlaufenden Schenkel 36 miteinander verbunden. Der Schenkel 36 erstreckt sich demnach mit vertikalem Abstand vom Dichtungskörper 31 zwischen den beiden Ausnehmungen 35 desselben.

Am horizontal verlaufenden Schenkel 36 des Bügels 33 ist ein Rahmen 37 montiert (siehe insbesondere Fig. 2). Der Rahmen 37 wird im wesentlichen von vier vertikal verlaufenden Rahmenteilen 38 und zwei horizontal verlaufenden Rahmenteilen 39 gebildet. Wie Fig. 2 entnommen werden kann, erstreckt sich an einem oberen Ende sowie an einem unteren Ende des Rahmens 37 jeweils ein horizontal verlaufendes Rahmenteil 39. Zu beiden Seiten der horizontal verlaufenden Rahmenteile 39 erstrecken sich jeweils zwei vertikal verlaufende Rahmenteile 38. Die horizontal verlaufenden Rahmenteile 39 sind als U-Profile und die vertikal verlaufenden Rahmenteile 38 als L-Profile ausgebildet. An jeder Seite der horizontal verlaufenden Rahmenteile 39 greift demnach an den beiden parallel zueinander verlaufenden U-Schenkeln jeweils eines der vertikal verlaufenden Rahmenteile 38 an. Daraus folgt unmittelbar, dass die im Bereich einer Seite der horizontal verlaufenden Rahmenteile 39 angeordneten, vertikal verlaufenden Rahmenteile 38 voneinander beabstandet sind. Der Abstand wird dabei durch die Breite der als U-Profile ausgebildeten, horizontal verlaufenden Rahmenteile 39 definiert.

Ein derart ausgebildeter Rahmen 37 verfügt über eine Vorderseite 40 und eine Rückseite 41. Sowohl im Bereich der Vorderseite 40 als auch im Bereich der Rückseite 41 sind jeweils zwei vertikal verlaufende Rahmenteile 38 angeordnet, welche die Vorderseite 40 sowie die Rückseite 41 seitlich begrenzen. Ferner verfügt der Rahmen 37 über insgesamt vier Schmalseiten, nämlich zwei horizontal verlaufende Schmalseiten 42 und zwei vertikal verlaufende Schmalseiten 43.

Die horizontal verlaufenden Schmalseiten 42 werden durch die horizontal verlaufenden Rahmenteile 39 definiert. Die vertikal verlaufenden Schmalseiten 43 hingegen werden durch jeweils zwei benachbarte, vertikal verlaufende Rahmenteile 38 definiert, die an einem Ende der horizontal verlaufenden Rahmenteile 39 befestigt sind, nämlich an gegenüberliegenden Schenkeln der als U-Profile ausgebildeten, horizontal verlaufenden Rahmenteile 39.

Wie bereits erwähnt, sind die vertikal verlaufenden Rahmenteile 38 als L-Profile ausgebildet. Mit einem ersten Schenkel 44 sind die als L-Profile ausgebildeten, vertikal verlaufenden Rahmenteile 38 an den horizontal verlaufenden Rahmenteilen 39 befestigt. Zweite Schenkel 45 der vertikal verlaufenden Rahmenteile 38 sind gegenüber den Schenkeln 44 um etwa 90° abgewinkelt. Wie Fig. 2 entnommen werden kann, sind einerseits in die ersten Schenkel 44 Öffnungen 46 und andererseits sind in die zweiten Schenkel 45 Öffnungen 47 eingebracht.

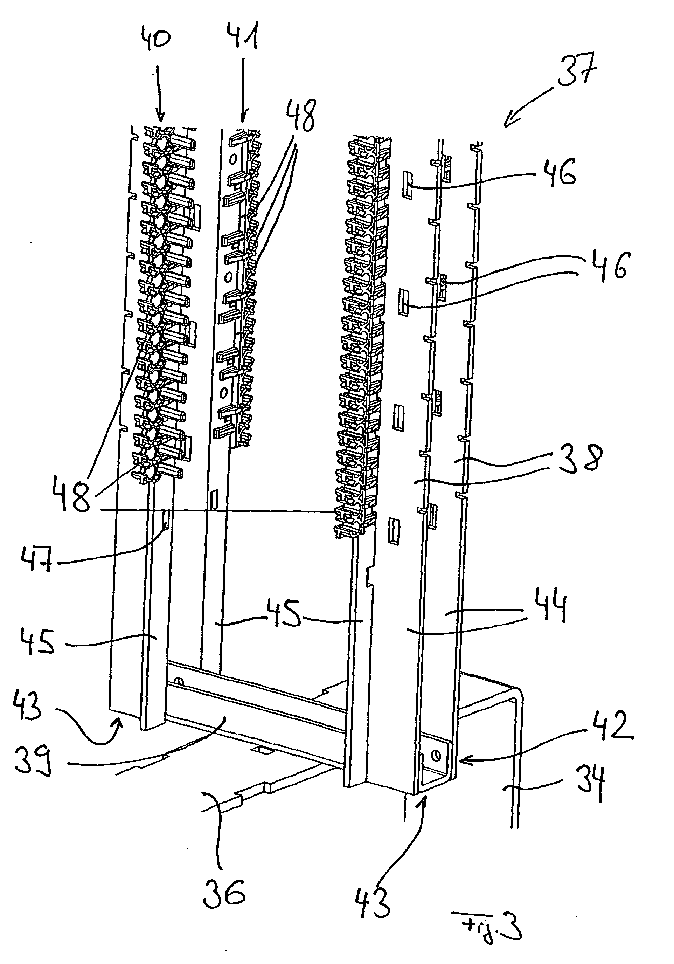

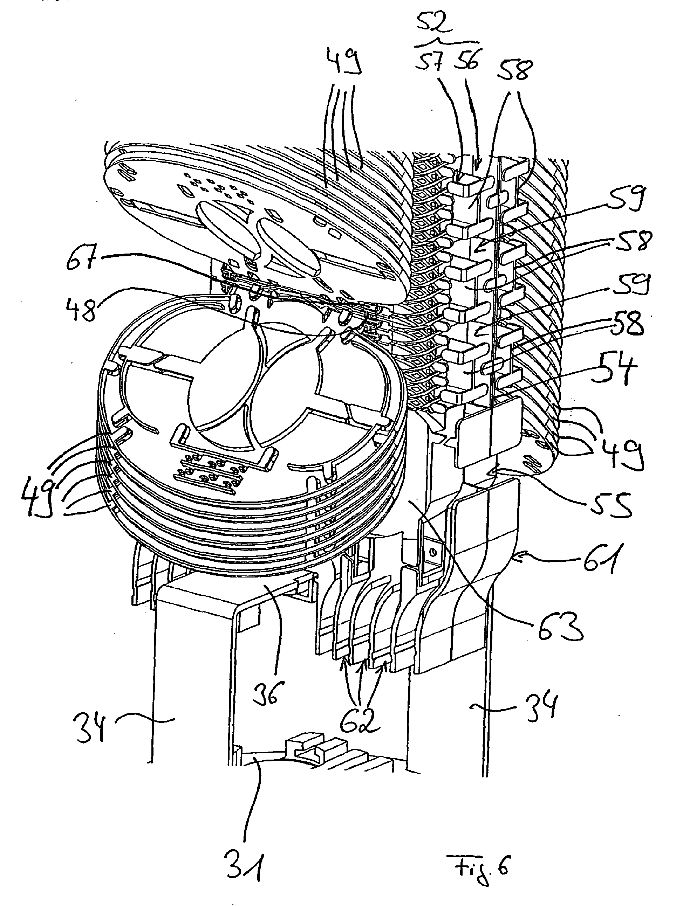

In die Öffnungen 47 der zweiten Schenkel 45 der als L-Profile ausgebildeten, vertikal verlaufenden Rahmenteile 38 sind gemäß Fig. 3 Führungen bzw. Halterungen 48 für Spleißkassetten 49 eingerastet. Die Spleißkassetten 49 sind in Fig. 3 nicht dargestellt, jedoch zum Beispiel in Fig. 1, 6 oder 7. Sowohl auf der Vorderseite 40 als auch auf der Rückseite 41 des Rahmens 37 sind die Halterungen 48 für die Spleißkassetten 49 vorgesehen. Eine Spleißkassette 49 ist in zwei Halterungen 48 montierbar, die entweder auf der Vorderseite 40 oder auf der Rückseite 41 des Rahmens 37 in gleicher Höhe einander gegenüberliegen. So kann insbesondere Fig. 1 entnommen werden, dass demnach sowohl an der Vorderseite 40 als auch an der Rückseite 41 des Rahmens 37 jeweils mehrere Spleißkassetten 49 übereinander angeordnet sind. Die Führungen bzw. Halterungen 48 für die Spleißkassetten 49 erlauben eine Verschwenkung der Spleißkassetten 49 um eine von den jeweiligen Halterungen 48 gebildete Schwenkachse. Dies kann insbesondere Fig. 6 entnommen werden, die auf der Vorderseite 40 des Rahmens 37 sechs nach unten geklappte Spleißkassetten 49 und mehrere nach oben verschwenkte Spleißkassetten 49 zeigt. Die Führungen bzw. Halterungen 48 für die Spleißkassetten 49 sind als zylindrische Profile ausgebildet.

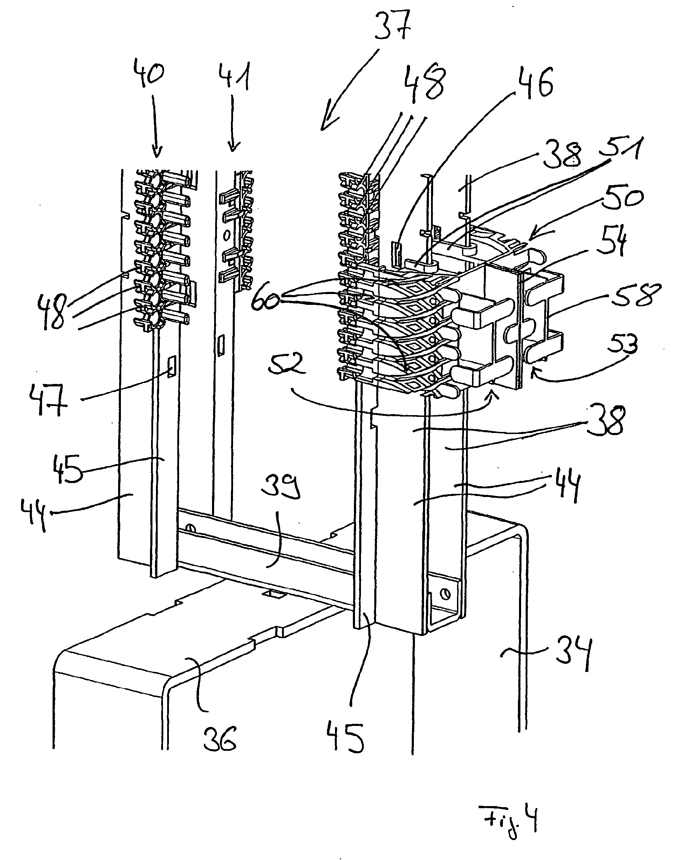

Fig. 4 zeigt den Rahmen 37 zusammen mit den am Rahmen 37 befestigten Halterungen 48 für die Spleißkassetten 49 und mit zusätzlich am Rahmen 37 befestigten Faserführungselementen 50. Die Ausgestaltung und Anordnung der Faserführungselemente 50 macht einen ersten Aspekt der hier vorliegenden Erfindung aus.

Es kann insbesondere Fig. 4 entnommen werden, dass die Faserführungselemente 50 einer der vertikal verlaufenden Schmalseiten 43 des Rahmens 37 zugeordnet sind. Die Faserführungselemente 50 sind im Bereich dieser einen vertikal verlaufenden Schmalseite 43 auf die Schenkel 44 der als L-Profile ausgebildeten, vertikal verlaufenden Rahmenteile 38 aufgeschoben, nämlich über widerhakenartige Verankerungselemente 51, welche in die Ausnehmungen 46 im Bereich der Schenkel 44 einrasten. Die Faserführungselemente 50 sind demnach ausschließlich im Bereich einer der vertikal verlaufenden Schmalseiten 43 des Rahmens 37 angeordnet.

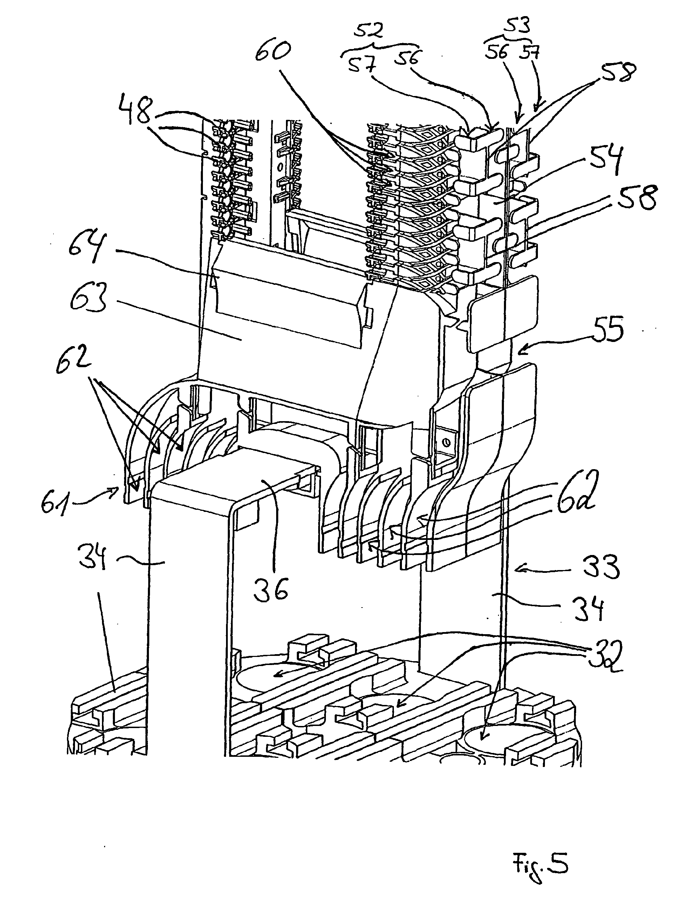

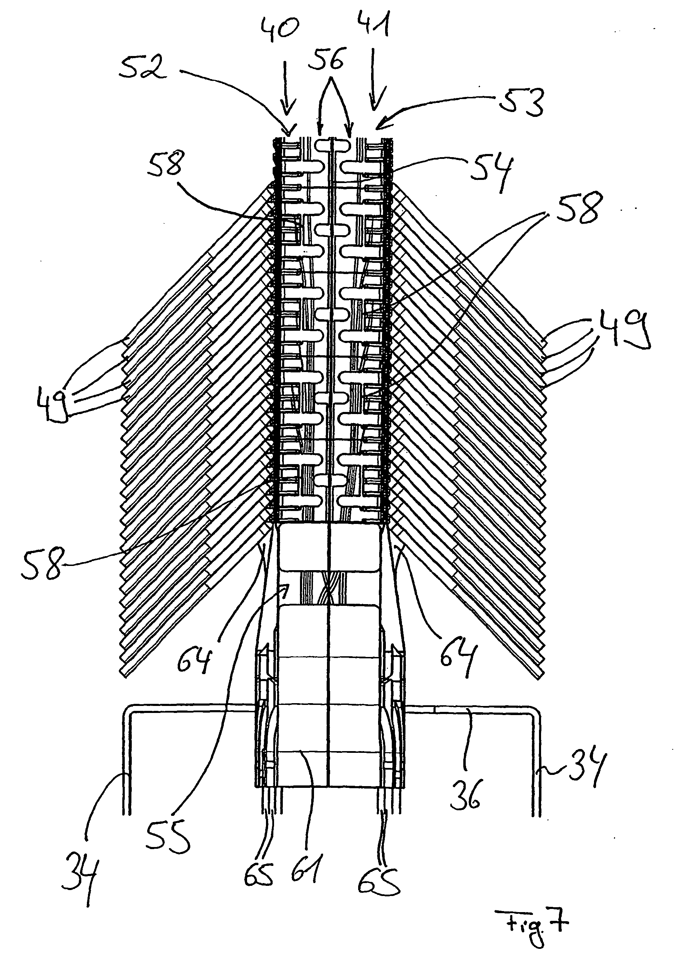

Wie jeder der Fig. 4 bis 9 entnommen werden kann, bilden die Faserführungselemente 50 zwei vertikal verlaufende Führungskanäle 52 und 53. Ein erster Führungskanal 52 ist der Vorderseite 40 des Rahmens 37 zugeordnet. Ein zweiter Führungskanal 53 ist der Rückseite 41 des Rahmens 37 zugeordnet. Dies kann am besten Fig. 7 entnommen werden. Die beiden vertikal verlaufenden Führungskanäle 52 und 53 sind durch eine ebenfalls vertikal verlaufende Trennwand 54 voneinander getrennt. Wie insbesondere Fig. 5 und 6 entnommen werden kann, ist die Trennwand 54 in einem unteren Abschnitt mit einem Durchbruch 55 versehen. Auf die Bedeutung des Durchbruchs 55 wird weiter unten noch in größerem Detail eingegangen. Seitlich neben der vertikal verlaufenden Schmalseite 43 des Rahmens 37 erstrecken sich also die beiden vertikal verlaufende Führungskanäle 52 und 53, der erste Führungskanal 52 ist der Vorderseite 40 des Rahmens 37 und der zweite Führungskanal 53 ist der Rückseite 41 des Rahmens 37 zugeordnet.

Weiterhin kann jeder der Fig. 4 bis 9 entnommen werden, dass jeder der beiden vertikal verlaufenden Führungskanäle 52 und 53 in jeweils zwei ebenfalls vertikal verlaufende Teilführungskanäle, nämlich einen innenliegenden Teilführungskanal 56 und einen außenliegenden Teilführungskanal 57 unterteilt ist. Im Bereich der Vorderseite 40, welcher der erste Führungskanal 52 zugeordnet ist, verläuft demnach ein innerer Teilführungskanal 56 und ein äußerer Teilführungskanal 57. Ebenfalls verläuft im Bereich der Rückseite 41 ein innenliegender Teilführungskanal 56 und ein außenliegender Teilführungskanal 57. Daraus folgt, dass die Trennwand 54 die beiden innenliegenden Teilführungskanäle 56 voneinander trennt. Die Trennung der innenliegenden Teilführungskanäle 56 von den außenliegenden Teilführungskanälen 57 im Bereich der Vorderseite 40 sowie im Bereich der Rückseite 41 des Rahmens 37 erfolgt über Trennstege 58. So sind über die gesamte Höhe des Rahmens 37 mehrere solcher Trennstege positioniert, wobei zwischen jeweils zwei benachbarten Trennstegen 58 Durchbrüche 59 ausgebildet sind. Daraus folgt, dass im Bereich der Trennwand 54, welche die beiden Führungskanäle 52 und 53 voneinander trennt, lediglich ein Durchbruch 55 in einem unteren Abschnitt der Trennwand 54 positioniert bzw. vorgesehen ist. Für die Trennung der innenliegenden Teilführungskanäle 56 von den außenliegenden Teilführungskanälen 57 sind jedoch mehrere Durchbrüche 59 über die gesamte Höhe des Rahmens 37 vorgesehen. Auf die Bedeutung der Durchbrüche 59 zwischen den Trennstegen 58 wird auch weiter unter in größerem Detail eingegangen. Wie insbesondere Fig. 7 entnommen werden kann, sind demnach vier Teilführungskanäle 56 bzw. 57 in einer Ebene nebeneinander positioniert, nämlich seitlich neben der einen vertikal verlaufenden Schmalseite 43 des Rahmens 37.

Die Faserführungselemente 50 bilden nicht nur die vertikal verlaufenden Führungskanäle 52, 53, sondern vielmehr auch gekrümmt verlaufende Führungskanäle 60 für Lichtwellenleiterfasern. Dies kann zum Beispiel Fig. 4 entnommen werden. Die gekrümmt verlaufenden Führungskanäle 60 münden einerseits in die außenliegenden Teilführungskanäle 57 und andererseits in die als zylindrische Hohlkörper ausgebildeten Halterungen 48 für die Spleißkassetten 49. Auf die Bedeutung der gekrümmt verlaufenden Führungskanäle 60 wird ebenfalls weiter unten in größerem Detail eingegangen.

Wie insbesondere Fig. 5 entnommen werden kann, ist in einem unteren Abschnitt des Rahmens 37, also im Bereich des Bügels 33, eine Leiteinrichtung bzw. Fixiereinrichtung 61 für Bündeladern angeordnet. Diese Leiteinrichtung bzw. Fixierungseinrichtung 61 für die Bündeladem verfügt über mehrere Leitkanäle 62. Die Leitkanäle 62 verfügen allesamt über einen gekrümmten Verlauf und enden im Bereich der vertikal verlaufenden Schmalseite 43, an welcher die Faserführungselemente 50 angeordnet sind und an welcher die vertikal verlaufenden Führungskanäle 52, 53 ausgebildet sind. In einem unteren Abschnitt der Leitkanäle 62 sind dieselben dem Dichtungskörper 31 und damit den Öffnungen 32 innerhalb des Dichtungskörpers 31 zugewandt. Beim Ausführungsbeispiel gemäß Fig. 1 bis 22 liegen die Leitkanäle 62 demnach alle in einer Ebene und enden im Bereich einer vertikal verlaufenden Schmalseite 43.

Oberhalb der Führungskanäle 62 sowie unterhalb der untersten Halterungen 48 für die Spleißkassetten 49 ist ein plattenförmiges Element 63 mit einem Anschlag 64 für die unterste Spleißkassette 49 positioniert. Wie insbesondere Fig. 7 entnommen werden kann, liegt die unterste Spleißkassette 49 in der nach unten geklappten bzw. nach unten geschwenkten Position auf dem Abschlag 64 auf. Hierdurch stellt sich der in Fig. 7 dargestellte, in etwa um 45° geneigte Verlauf der Spleißkassetten 49 in der nach unten geklappten Position ein.

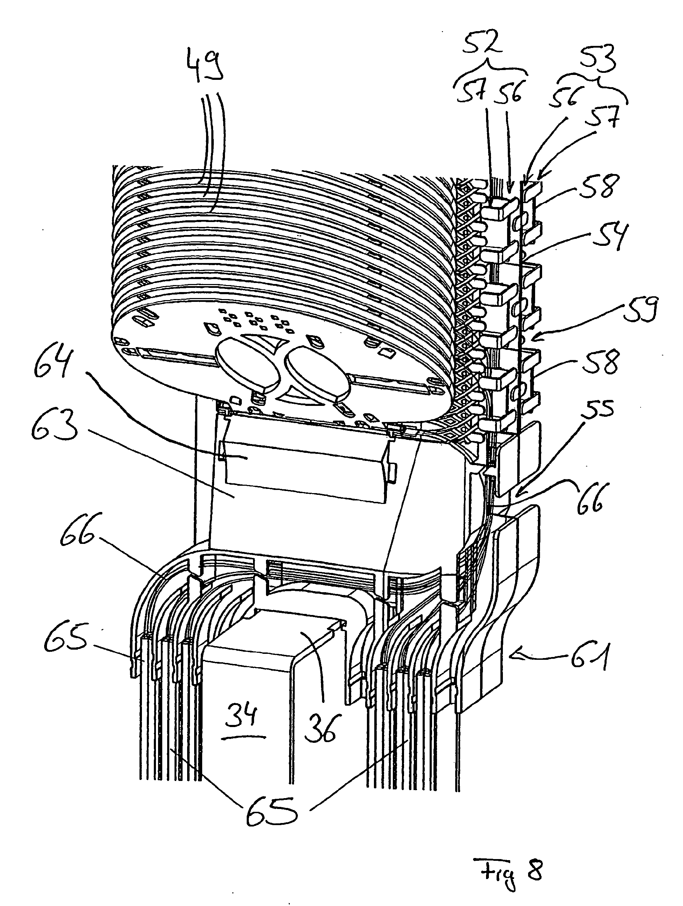

Wie bereits mehrfach erwähnt, werden zu verbindende Lichtwellenleiterkabel durch die Öffnungen 32 des Dichtungskörpers 31 in die Haubenmuffe 30 eingeführt. In solchen Lichtwellenleiterkabeln sind mehrere Bündeladern positioniert, wobei innerhalb einer Bündelader vorzugsweise zwölf Lichtwellenleiterfasern angeordnet sind. Fig. 8 zeigt mehrere Bündeladern 65 mit in den Bündeladern 65 angeordneten Lichtwellenleiterfasern 66. Das Lichtwellenleiterkabel als solches ist in Fig. 8 nicht gezeigt. Die Bündeladern 65 werden über die unteren Abschnitte der Leitkanäle 62 in etwa parallel zueinander ausgerichtet in die Leitkanäle 62 der Fixiereinrichtung 61 eingeführt. Sobald die Bündeladern 65 in die Leitkanäle 62 der Fixiereinrichtung 61 eingeführt sind, werden die Bündeladem vorzugsweise auch an den Leitkanälen 62 über nicht-dargestellte Kabelbinder fixiert. Im unmittelbaren Anschluss hieran sind Hüllen der Bündeladern 65 entfernt und es werden nur noch die vereinzelten Lichtwellenleiterfasern 66 geführt. So kann Fig. 8 entnommen werden, dass alle in den Bündeladern 65 geführten lichtwellenleiterfasern 66 über die Leitkanäle 62 in den Bereich der vertikal verlaufenden Schmalseite 43 des Rahmens 37 geführt werden, in welchem die Faserführungselemente 50 positioniert sind. Die Lichtwellenleiterfasern 66 werden demnach in den Bereich der vertikal verlaufenden Führungskanäle 52 und 53 geleitet und sind demnach ausschließlich im Bereich der vertikal verlaufenden Schmalseite 43 seitlich neben den Spleißkassetten 48 geführt, in welchem die Faserführungselemente 50 positioniert sind.

Beim Übergang der Lichtwellenleiterfasern 66 aus der Fixiereinrichtung 61 in die Faserführungselemente 50 muss entschieden werden, ob eine einzelne Lichtwellenleiterfaser 66 einer Spleißkassette 49 im Bereich der Vorderseite 40 oder im Bereich der Rückseite 41 zugeführt wird. In diesem Zusammenhang spielt der Durchbruch 55 in der Trennwand 54 eine Rolle. Der Durchbruch 55 dient demnach der Umlenkung von Lichtwellenleiterfasern 66 aus dem Bereich der Vorderseite 40 in den Bereich der Rückseite 41 oder aus dem Bereich der Rückseite 41 in den Bereich der Vorderseite 40. Unmittelbar nachdem die Lichtwellenleiterfasern 66 demnach die Leitkanäle 62 der Fixiereinrichtung 61 verlassen haben, wird entschieden, ob die Lichtwellenleiterfasern 66 dem vertikal verlaufenden Führungskanal 52 im Bereich der Vorderseite 40 oder dem vertikal verlaufenden Führungskanal 53 im Bereich der Rückseite 41 zugeführt werden. Die Umlenkung von Lichtwellenleiterfasern 66 im Bereich des Durchbruchs 55 der Trennwand 54 kann insbesondere Fig. 7 deutlich entnommen werden.

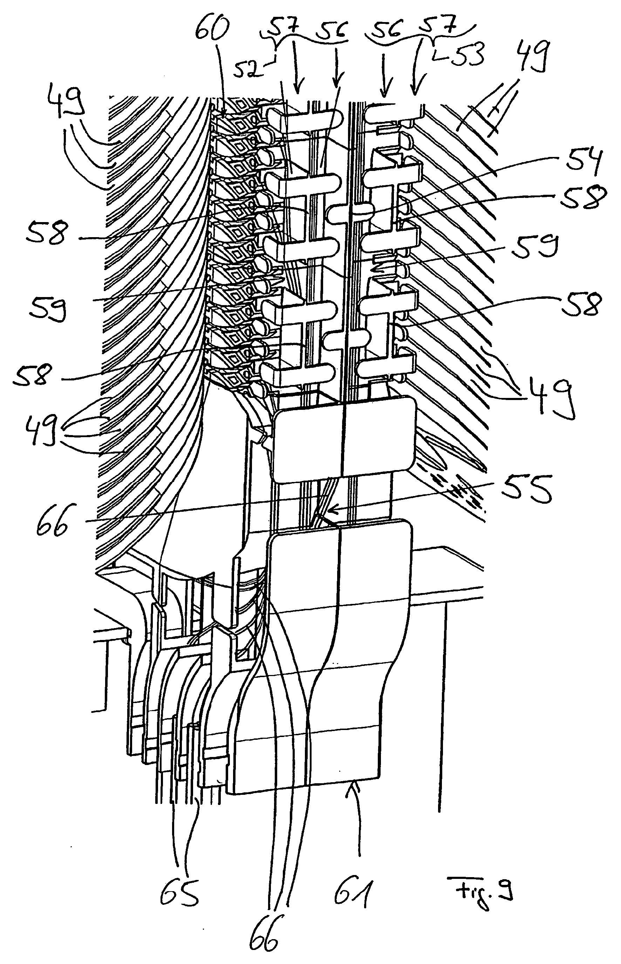

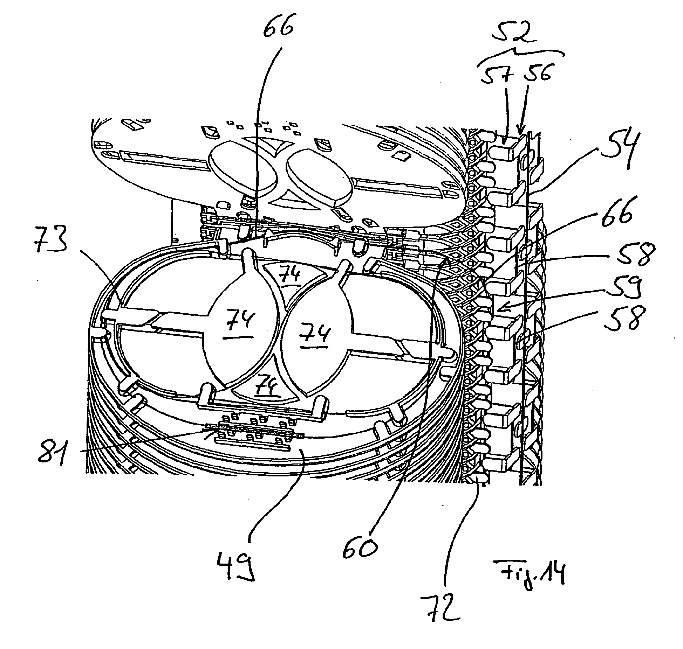

Nachdem festgelegt ist, ob die Lichtwellenleiterfasern 66 in dem der Vorderseite 40 zugeordneten Führungskanal 52 oder in dem der Rückseite 41 zugeordneten Führungskanal 53 geführt und letztendlich den Spleißkassetten 49 zugeführt werden, sind alle Lichtwellenleiterfasern 66 im Bereich eines Führungskanals 52 bzw. 53 zunächst im innenliegenden Teilführungskanal 56 des jeweiligen Führungskanals 52 bzw. 53 geführt. Die Lichtwellenleiterfasem 66 werden solange in dem innenliegenden Teilführungskanal 56 geführt, bis die Höhe erreicht ist, in welcher die Spleißkassette 49 positioniert ist, welcher die entsprechende Lichtwellenleiterfaser 66 zugeführt werden soll. Ist die entsprechende Höhe erreicht, so wird die entsprechende Lichtwellenleiterfaser 66 aus dem innenliegenden Teilführungskanal 56 über die Durchbrüche 59 im Bereich der Trennstege 58 in den außenliegenden Teilführungskanal 57 umgelenkt. Dies kann zum Beispiel Fig. 7 und 9 besonders deutlich entnommen werden. Haben die Lichtwellenleiterfasern 66 die entsprechende Höhe der Spleißkassette 49 erreicht, in welchen die Lichtwellenleiterfasern 66 eingeführt werden sollen, so verlaufen die Lichtwellenleiterfasern 66 demnach erstmals im außenliegenden Teilführungskanal 57. Von dem außenliegenden Teilführungskanal 57 werden die Lichtwellenleiterfasern dann in den gekrümmten Führungskanal 60 eingeführt, welcher mit der Halterung 48 der entsprechenden Spleißkassette 49 zusammenwirkt. Dies kann insbesondere Fig. 9 sowie Fig. 14 im Detail entnommen werden.

Durch die erfindungsgemäße Ausgestaltung wird demnach eine besonders strukturierte und schonende Ablage bzw. Handhabung von Lichtwellenleiterfasern innerhalb einer Kabelmuffe ermöglicht. Die Lichtwellenleiterfasern 66 werden, nachdem sie aus den Bündeladern 65 durch Entfernen der Hülle der Bündeladern 65 vereinzelt wurden, zunächst in den Bereich einer Seite der Spleißkassetten 49 geführt. Die Lichtwellenleiterfasern 66 werden ausschließlich zu einer Seite der Spleißkassetten 49 bzw. zu einer Seite des Rahmens 37 in vertikal verlaufenden Führungskanälen 52 und 53 geführt. Unmittelbar nachdem alle Lichtwellenleiterfasern 66 in den Bereich dieser einen Seite geführt worden sind, werden die Lichtwellenleiterfasern entweder einem der Vorderseite 40 des Rahmens 37 zugeordneten Führungskanal 52 oder einem der Rückseite 41 des Rahmens 37 zugeordneten Führungskanal 53 überführt und vertikal nach oben geführt. Innerhalb dieser beiden Führungskanäle 52 und 53 verlaufen die Lichtwellenleiterfasern 66 zunächst im Bereich der innenliegenden Teilführungskanäle 56, bis die Höhe der Spleißkassette 49 erreicht ist, in welche die jeweilige Lichtwellenleiterfaser 66 eingeführt werden soll. Ist diese Höhe erreicht, so wird die Lichtwellenleiterfaser 66 in den Bereich des außenliegenden Teilführungskanals 57 überführt und dann letztendlich in den gekrümmt verlaufenden Führungskanal 60, der die Lichtwellenleiterfaser 66 einer Spleißkassette 49 zuführt, eingefädelt.

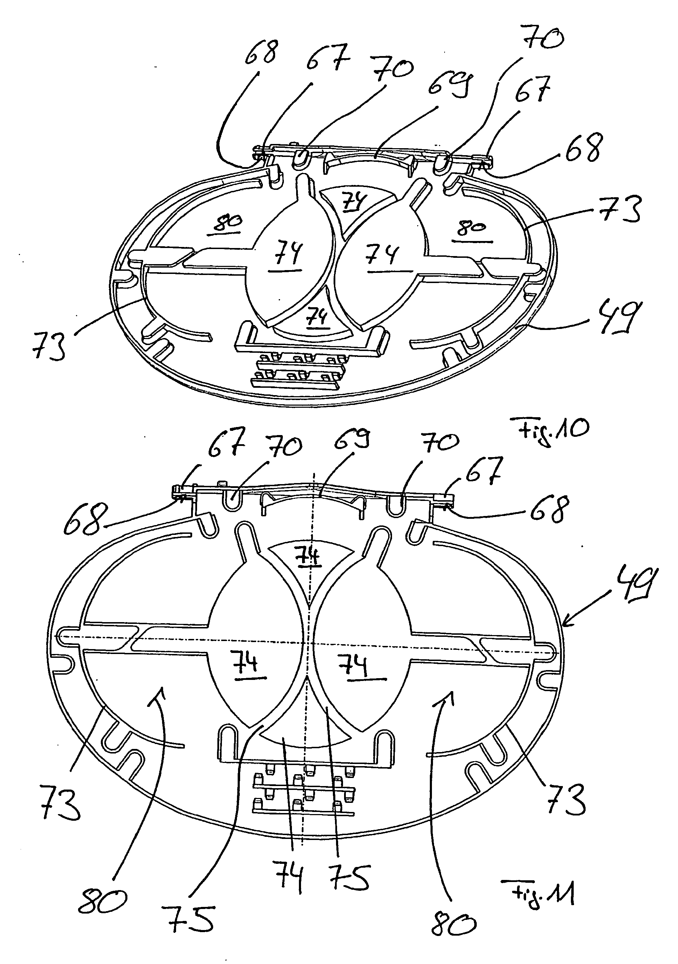

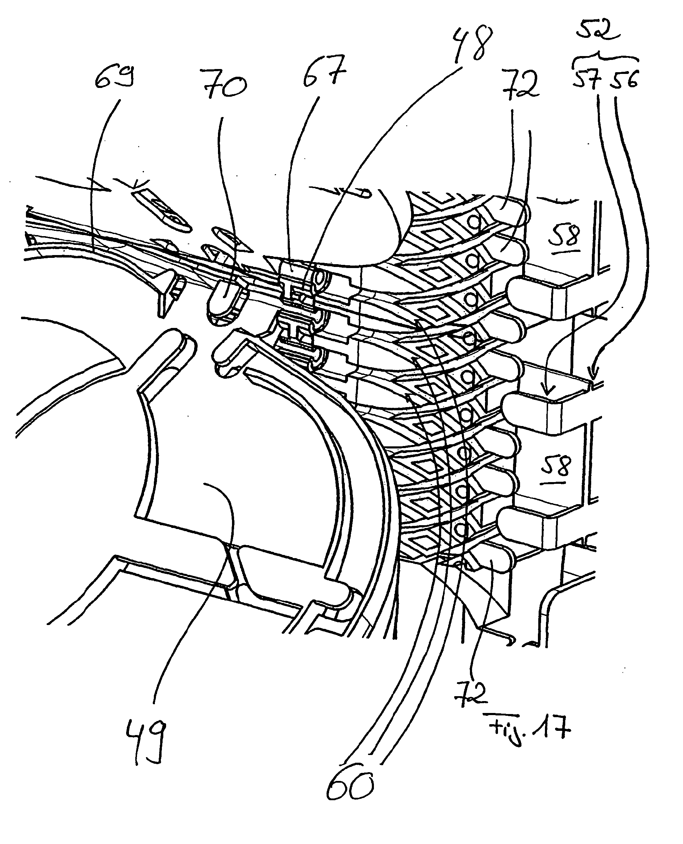

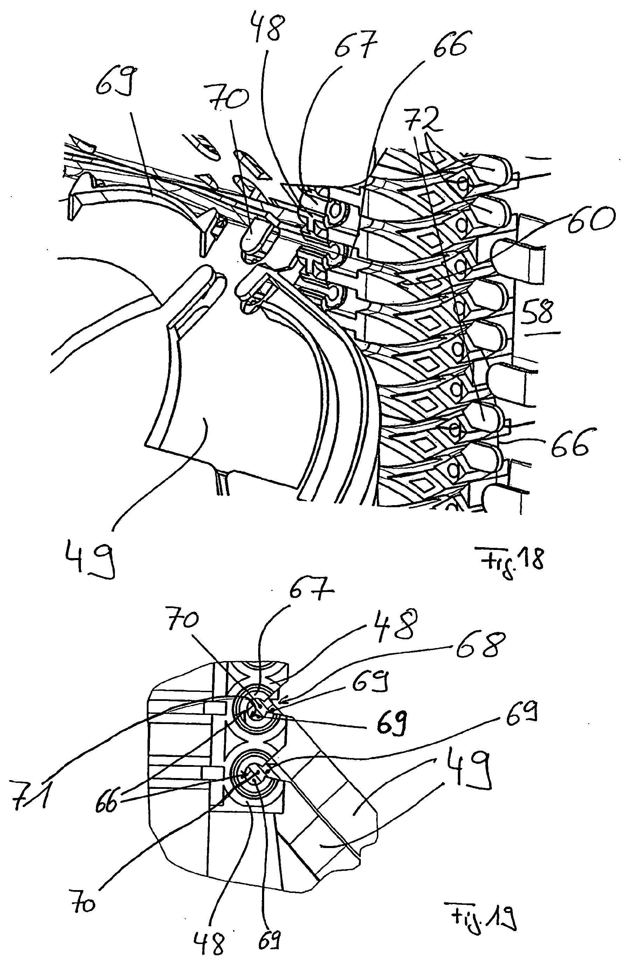

Die Spleißkassetten 49 werden in die Halterungen 48 über zylindrische Achskörper 67 eingeclipst. Dies kann insbesondere Fig. 6 entnommen werden. Die zylindrischen Achskörper 67 der Spleißkassetten 49 sind in Fig. 10 bis 12 in größerem Detail dargestellt. Weiterhin können diese Details Fig. 17 und 18 entnommen werden.

Die zylindrischen Achskörper 67 der Spleißkassetten 49 sind als Hohlzylinder ausgebildet. Die Lichtwellenleiterfasern 66 werden zum Einführen derselben in eine Spleißkassette 49 durch die zylindrischen Achskörper 67 geführt, und zwar derart, dass eine Einführungsrichtung der Lichtwellenleiterfasern 66 in eine Spleißkassette 49 in etwa parallel zu einer von den Achskörpern 67 definierten Schwenkachse der jeweiligen Spleißkassette 49 verläuft. Die Führung einer Lichtwellenleiterfaser 66 durch den zylindrischen Achskörper 67 parallel zur Schwenkachse der Spleißkassette 49 kann Fig. 18 besonders deutlich entnommen werden. In diesem Zusammenhang ist von Bedeutung, dass die zylindrischen Achskörper 67 axial geschlitzt sind, also radial nach außen eine Öffnung 68 aufweisen. Die Öffnung 68 im Bereich der zylindrischen Achskörper 67 kann zum Beispiel Fig. 10 entnommen werden. Über die Öffnung 68 sind die Lichtwellenleiterfasern 66 in radialer Richtung in die zylindrischen Achskörper 67 einführbar. Hierdurch wird eine besonders einfache und schonende Einführung der Lichtwellenleiterfasern 66 aus den gekrümmt verlaufenden Führungskanälen 66 in die Spleißkassette 49 ermöglicht.

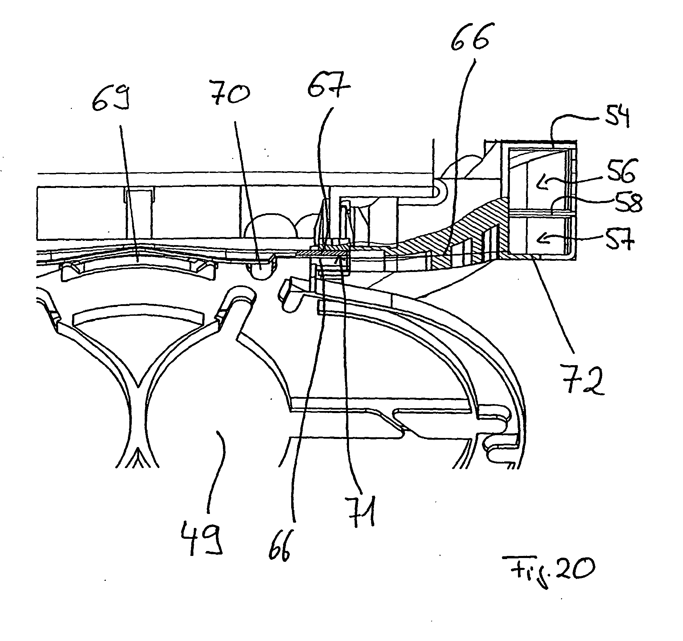

Um nun zu gewährleisten, dass die in die zylindrischen Achskörper 67 eingelegten Lichtwellenleiterfasern 66 insbesondere beim Verschwenken der Spleißkassetten 49 nicht aus den zylindrischen Achskörpern 67 herausspringen und dabei beschädigt werden können, sind in die Spleißkassette 49 Führungsstege 69, 70 integriert (siehe insbesondere Fig. 10 und 11). Wie insbesondere Fig. 19 entnommen werden kann, sind die Führungsstege 69, 70 derart in die Spleißkassette 49 integriert, dass einer der Führungsstege 69, 70 in der Projektion in jeder Position der Spleißkassette 49 die Öffnung 68 im Achszylinder 67 abdeckt. Die Lichtwellenleitefasem 66 liegen stets an einer der Öffnung 68 gegenüberliegenden Innenwand 71 des zylindrischen Achskörpers 67 an. Hierdurch ist demnach sichergestellt, dass beim Verschwenken der Spleißkassette 49 die Lichtwellenleiterfasern 66 stets innerhalb des Achskörpers 67 verbleiben und nicht aus diesem herausspringen können. Weiterhin sind seitlich neben den gekrümmt verlaufenden Kanälen 60 im Bereich der außenliegenden Teilführungskanäle 57 Führungsstege 72 positioniert, die ebenfalls der Führung der Lichtwellenleiterfasern 66 dienen (siehe insbesondere Fig. 14, 15, 16 und 18). Die Führungsstege 72 im Bereich der außenliegenden Teilführungskanäle 57 verhindern, dass die Lichtwellenleiterfasern aus den außenliegenden Teilführungskanälen 57 herausfallen. Weiterhin bewirken auch die Führungsstege 72 im Bereich der außenliegenden Teilführungskanäle 57, dass die Lichtwellenleiterfasern 66 an der Innenwand 71 des zylindrischen Achskörpers 67 anliegen. Dies kann insbesondere Fig. 20 entnommen werden. So ist nämlich eine Innenwand des Führungsstegs 72 gegenüber der Innenwand 71 der zylindrischen Achskörper 67 nach hinten bzw. nach innen versetzt, so dass sich der Fig. 20 dargestellte, leicht gekrümmte bzw. leicht nach hinten bzw. nach innen gebogene Verlauf der Lichtwellenleiterfasern 66 einstellt.

Ein weiterer Aspekt der hier vorliegenden Erfindung betrifft die Führung der Lichtwellenleiterfasern 66 innerhalb der Spleißkassetten 49. So sind die in den Spleißkassetten 49 verlaufenden Lichtwellenleiterfasern 66 innerhalb der Spleißkassetten 49 kreisförmig geführt. Die kreisförmige Führung der Lichtwellenleiterfasern 66 hat den Vorteil, dass dieselben einer minimierten, mechanischen Belastung unterliegen. Die Übertragungseigenschaften der Lichtwellenleiterfasem 66 werden dann nicht negativ beeinflusst.

Zur Gewährleistung der kreisförmigen Führung der Lichtwellenleiterfasern 66 innerhalb der Spleißkassetten 49 sind in die Spleißkassetten 49 mehrere Führungskanäle bzw. Führungsrippen integriert. So zeigt Fig. 11 zwei äußere, halbkreisförmige Führungsrippen 73 sowie in einem mittleren Abschnitt der Spleißkassetten 49 angeordnete Führungsrippen 74, deren äußere Kontur ebenfalls zumindest abschnittsweise ein Kreissegment definiert. So sind beim Ausführungsbeispiel der Fig. 11 in dem mittleren Abschnitt der Spleißkassetten 49 insgesamt vier Führungsrippen 74 angeordnet. Alle Außenkanten der Führungsrippen 74 definieren unterschiedlich große Kreissegmente. Zwischen den im mittleren Bereich der Spleißkassette 49 angeordneten Führungsrippen 74 sind kreisförmige Führungskanäle 75 ausgebildet.

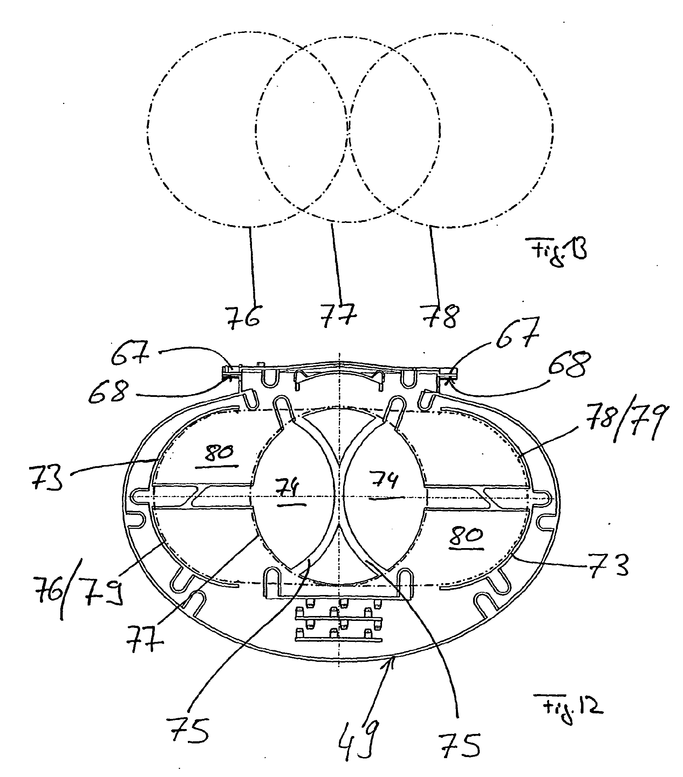

Anhand der Fig. 12 und 13 kann entnommen werden, dass die Führungsrippen 73 sowie die Führungsrippen 74 drei ineinander verschachtelte sowie einander überlappende Kreisführungen 76, 77 und 78 bilden. Die Kreisführungen 76, 77 und 78 sind dabei derart zueinander ausgerichtet, dass die beiden äußeren Kreisführungen 76 und 78 sich im mittleren Abschnitt der Spleißkassetten 49 berühren und dort tangential ineinander übergehen. In diesem Bereich ist dann eine Krümmungsradiusänderung für die Lichtwellenleiterfasern 66 realisierbar. Weiterhin sind die Kreisführungen 76, 77 und 78 derart zueinander ausgerichtet, dass die Lichtwellenleiterfasern 66 unabhängig von deren Länge mit in etwa gleichen Radien kreisförmig in der Spleißkassette geführt werden können. Hierdurch ist es möglich, für jede beliebige Länge von Lichtwellenleiterfasern 66 innerhalb der Spleißkassetten 49 eine kreisförmige Führung unter Einhaltung des idealen Biegeradius und damit schonende Handhabung der Lichtwellenleiterfaser 66 zu sorgen. So zeigt zum Beispiel Fig. 12, dass im Sinne einer Kreisführung 79 auch eine ovale Führung der Lichtwellenleiter möglich ist, wobei die ovale Kreisführung 79 sich aus den Kreisführungen 76 und 78 zusammensetzt. In diesem Zusammenhang ist weiterhin von Bedeutung, dass zwischen den äußeren Führungsrippen 73 und den inneren Führungsrippen 74 ein Stauraum 80 für Überlängen der Lichtwellenleiterfasem 66 geschaffen wird. Innerhalb dieses Stauraums 80 findet der eigentliche Längenausgleich für die Lichtwellenleiterfasern statt, da innerhalb des Stauraums 80 die ovale Kreisführung 79 mehr oder weniger stark ausgeprägt sei kann.

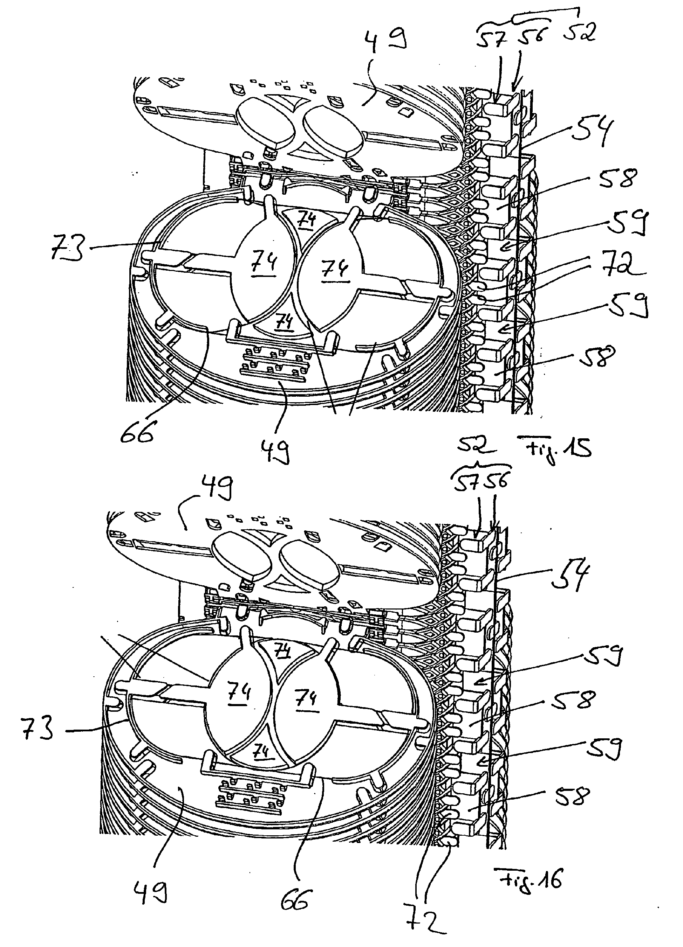

Fig. 14 bis 16 zeigen Lichtwellenleiterfasern 66, die innerhalb der Spleißkassetten 49 auf unterschiedliche Art und Weise geführt werden. So zeigt Fig. 16 mehrere Lichtwellenleiterfasern 66, die einerseits oval und andererseits kreisförmig geführt sind. Weiterhin zeigt Fig. 14 eine Spleißstelle 81 zwischen zwei zu verbindenden Lichtwellenleiterfasern 66, die in einem eigens hierfür vorgesehenen Bereich der Spleißkassette 49 abgelegt ist. Innerhalb einer solchen Spleißkassette 49 sind insgesamt vier derartige Kabelspleiße 81 ablegbar.

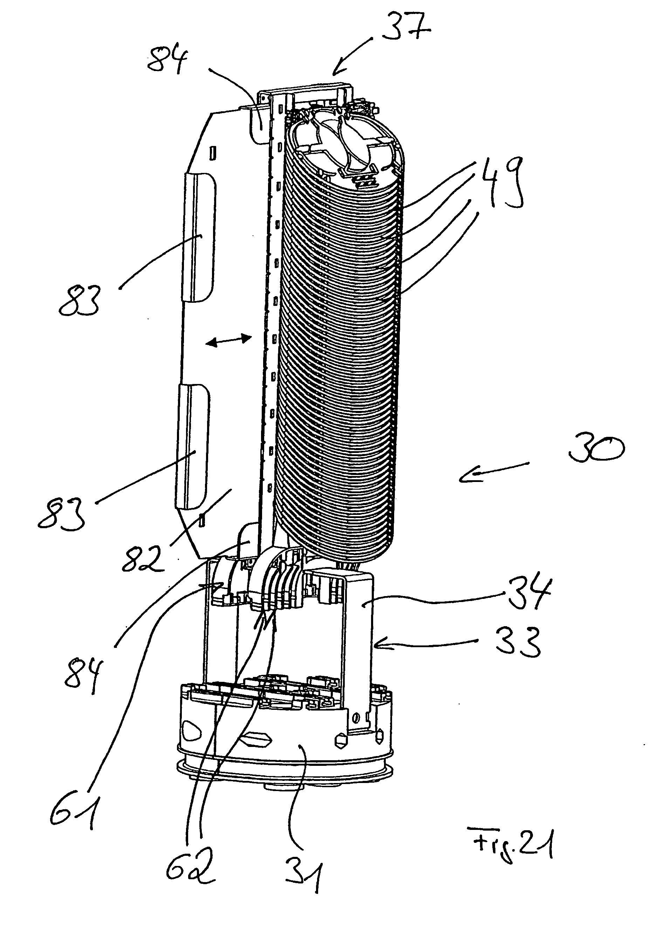

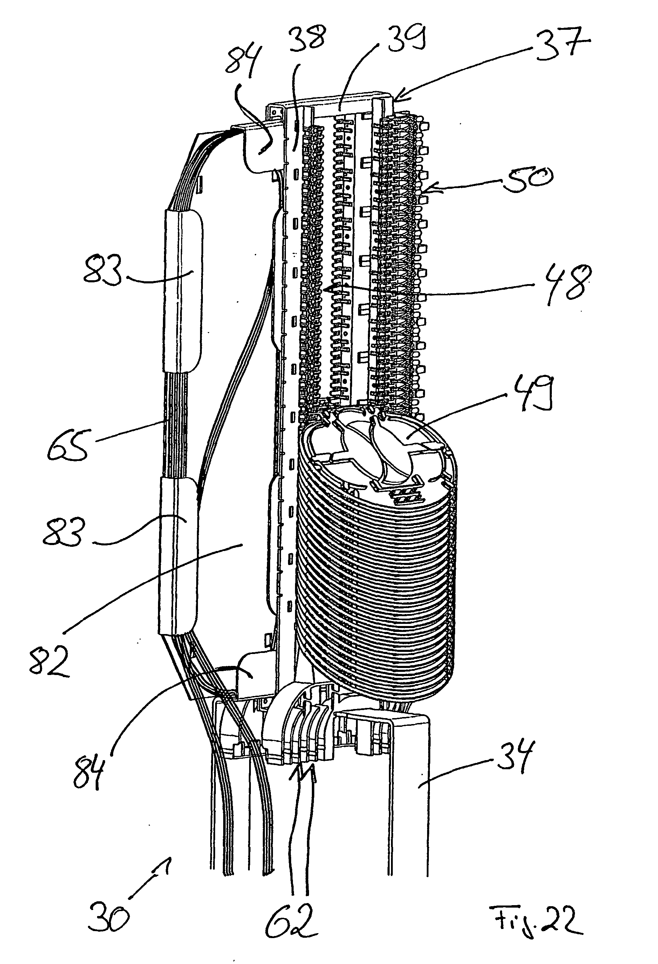

Nach einem weiteren Aspekt der hier vorliegenden Erfindung ist in den Rahmen 37 der Haubenmuffe 30 eine aus dem Rahmen 37 herausziehbare Schublade 82 zur Ablage ungeschnittener Bündeladem 65 integriert. Die Schublade 82 ist zwischen den vertikal verlaufenden Rahmenteilen 38 des Rahmens 37 in denselben integriert und kann in horizontaler Richtung aus dem Rahmen 37 herausgezogen werden. Die Schublade 82 wird dabei zu der vertikal verlaufenden Schmalseite 43 des Rahmens 37 aus demselben herausgezogen, die der vertikal verlaufenden Schmalseite 43 gegenüberliegt, an welcher die Faserführungselemente 50 befestigt sind. Zu einer Seite des Rahmens 37 bzw. zu einer Seite der Spleißkassette 49 sind demnach die Lichtwellenleiterfasern 66 im Bereich der Faserführungselemente 50 geführt. Zu der gegenüberliegenden Schmalseite 43 ist die Schublade 82 auf dem Rahmen 37 herausziehbar. Fig. 1 zeigt die Schublade 82 in einer in den Rahmen 37 hineingeschobenen Position, Fig. 21 in einer aus dem Rahmen 37 herausgezogenen Position. Fig. 22 zeigt in der Schublade 82 abgelegte, ungeschnittene Bündeladern 65.

Um die Schublade 82 zum Herausziehen derselben aus dem Rahmen 37 ergreifen zu können, sind im gezeigten Ausführungsbeispiel an einer vertikal verlaufenden Seite der Schublade 82 Betätigungsgriffe 83 vorgesehen. Die Betätigungsgriffe 83 dienen gleichzeitig der sicheren Führung der Bündeladern 65 innerhalb der Schublade 82. Zusätzlich zu den Betätigungsgriffen 83 sind an horizontal verlaufenden Seiten der Schublade 82 Führungen 84 vorgesehen. Auch die Führungen 84 dienen der sicheren Ablage der Bündeladern 65 innerhalb der Schublade 82.

Im Sinne des ersten Ausführungsbeispiels gemäß Fig. 1 bis 22 der hier vorliegenden Erfindung wird demnach eine Haubenmuffe 30 vorgeschlagen, innerhalb derer alle Lichtwellenleiterfasern 66, nachdem dieselben aus den Bündeladern 65 im Bereich der Fixiereinrichtung 61 durch Entfernen der Bündeladerhülle vereinzelt wurden, auf eine Seite neben die Stapel der Spleißkassetten 49 geführt sind. Die Lichtwellenleiterfasern 66 werden demnach ausschließlich zu einer Seite der Stapel der Spleißkassetten 49 vertikal nach oben geführt. Hierzu sind an dieser einen Seite Faserführungselemente 50 vorgesehen, die sowohl im Bereich der Vorderseite 40 als auch im Bereich der Rückseite 41 des Rahmens 37 vertikal verlaufende Führungskanäle 52, 53 bereitstellen, die jeweils in einen innenliegenden Teilführungskanal 56 und in einen außenliegenden Teilführungskanal 57 unterteilt sind. Weiterhin liegt es im Sinne der Erfindung, die Lichtwellenleiterfasern 66 aus den außenliegenden Teilführungskanälen 57 heraus in gekrümmten Führungskanälen 60 derart zu führen, dass die Lichtwellenleiterfasern 66 durch zylindrische Achskörper 67 der Spleißkassetten 49 geführt und so in das Innere der Spleißkassetten 49 geleitet werden. Durch in die Spleißkassetten 49 integrierte Führungsstege 69, 70 wird ein Herausspringen der Lichtwellenleiterfasern 66 aus den zylindrischen Achskörpern 67, nämlich aus einer radialen Öffnung 68 der Achskörper, verhindert. Innerhalb der Spleißkassetten 49 sind die Lichtwellenleiterfasern 66 kreisförmig geführt. Weiterhin ist eine Schublade 82 zur Ablage ungeschnittener Bündeladern vorgesehen, die aus dem Rahmen 37 zu einer Seite herausgezogen werden kann, die der Seite gegenüberliegt, an welcher die Faserführungselemente 50 befestigt sind. Die Spleißkassetten 59 können in die Halterungen 48 unabhängig von den Faserführungselementen 50 befestigt werden. Hierdurch ergibt sich ein modularer Aufbau der erfindungsgemäßen Vorrichtung.

Die obigen Ausführungen zu Figuren 1 bis 22 beziehen sich allesamt auf die Haubenmuffe 30 nach dem ersten Ausführungsbeispiel der Erfindung. Nachfolgend wird unter Bezugnahme auf Figuren 23 bis 32 ein zweites Ausführungsbeispiel der Erfindung beschrieben. So betrifft auch das zweite Ausführungsbeispiel gemäß Figuren 23 bis 32 eine Haubenmuffe 85. In der grundlegenden konstruktiven Ausführungen stimmt die Haubenmuffe 85 des zweiten Ausführungsbeispiels gemäß Figuren 23 bis 32 mit der Haubenmuffe 30 des ersten Ausführungsbeispiels gemäß Figuren 1 bis 22 überein. Zur Vermeidung unnötiger Wiederholungen werden daher für gleiche Baugruppen gleiche Bezugsziffern verwendet. Nachfolgend wird lediglich auf die Unterschiede eingegangen, die die Haubenmuffe 85 nach dem zweiten Ausführungsbeispiel gemäß Figuren 23 bis 32 von der Haubenmuffe 30 des ersten Ausführungsbeispiels gemäß Figuren 1 bis 22 unterscheidet.

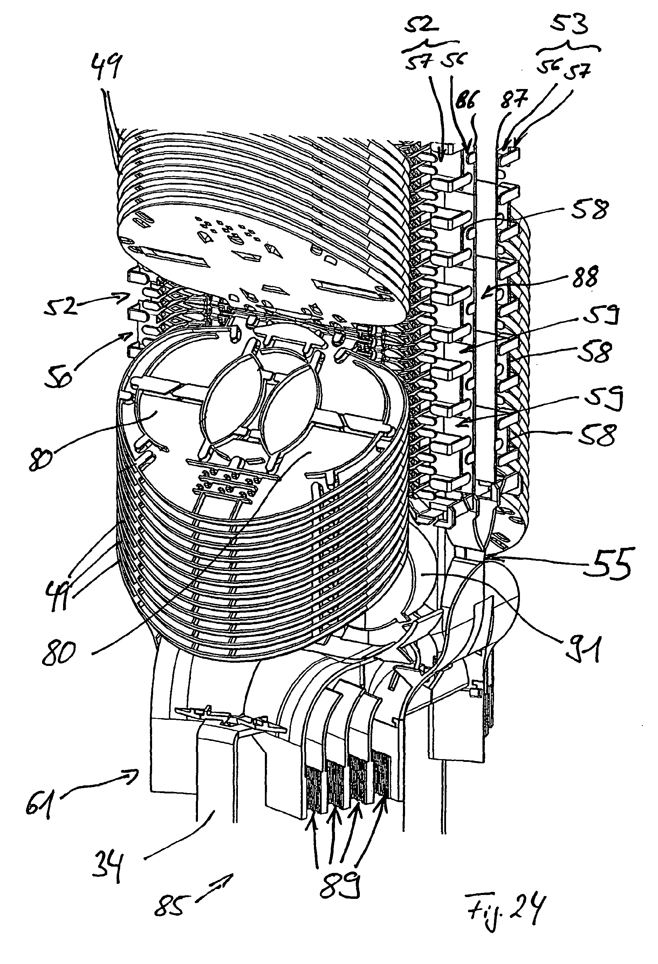

Ein erster grundlegender Unterschied zwischen der Haubenmuffe 85 nach dem zweiten Ausführungsbeispiel der Erfindung und der Haubenmuffe 30 nach dem ersten Ausführungsbeispiel der Erfindung liegt darin, dass bei der Haubenmuffe 85 auf die Schublade verzichtet wird. Bei der Haubenmuffe 85 nach dem zweiten Ausführungsbeispiel der Erfindung erstrecken sich zu beiden vertikal verlaufenden Schmalseiten 43 des Rahmens 37 Faserführungselemente 50 im Sinne der Erfindung. Dies kann insbesondere Figuren 23 und 24 entnommen werden. Daraus folgt unmittelbar, dass im Bereich der beiden vertikal verlaufenden Schmalseiten 43 Führungskanäle 52 und 53 ausgebildet sind. Jeder dieser Führungskanäle 52 und 53 ist wiederum in Teilführungskanäle unterteilt, nämlich in innenliegende Teilführungskanäle 56 und außenliegende Teilführungskanäle 57. Seitlich neben den beiden vertikal verlaufenden Schmalseiten 43 und damit zu beiden Seiten der Spleißkassetten 49 erstrecken sich demnach jeweils vier in einer Ebene nebeneinander positionierte Teilführungskanäle 56 bzw. 57.

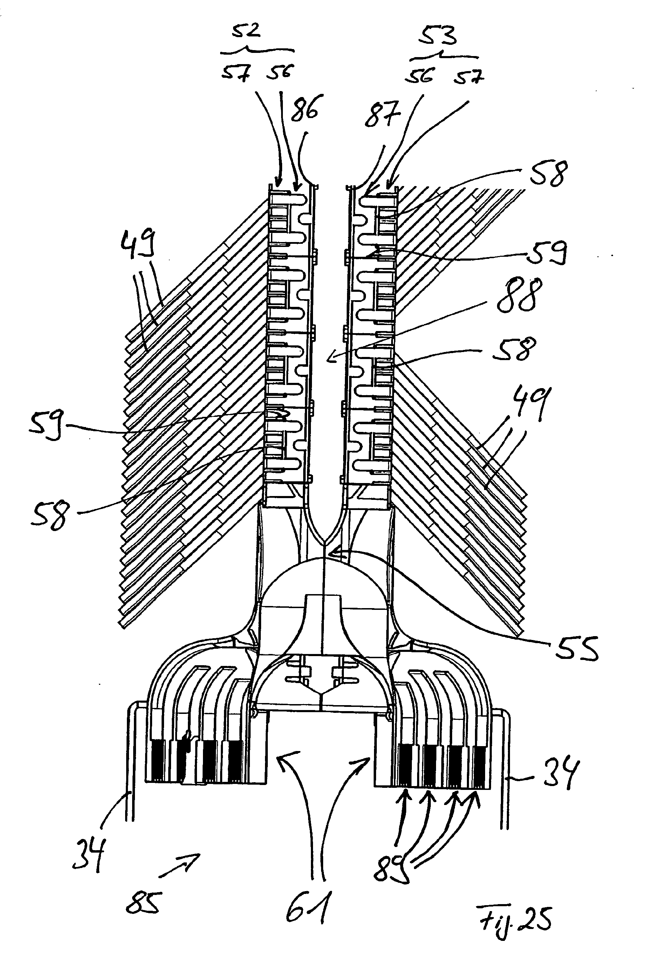

Wie insbesondere Figuren 23 bis 25 entnommen werden kann, liegt ein zweiter Unterschied zwischen der Haubenmuffe 85 nach dem zweiten Ausführungsbeispiel der Erfindung und der Haubenmuffe 30 nach dem ersten Ausführungsbeispiel der Erfindung darin, dass die im Bereich der beiden vertikal verlaufenden Schmalseiten 43 verlaufenden Führungskanäle 52 und 53 nicht lediglich durch eine vertikal verlaufende Trennwand voneinander getrennt sind, sondern vielmehr durch zwei vertikal verlaufende Trennwände 86 und 87, wobei die beiden Trennwände 86 und 87 voneinander beabstandet sind und demnach einen Aufnahmeraum 88 begrenzen. Dieser Aufnahmeraum 88 kann am besten Figur 25 entnommen werden. In den Aufnahmeraum 88 sind ungeschnittene Bündeladern einführbar. Der Aufnahmeraum 88 der Haubenmuffe 85 gemäß dem zweiten Ausführungsbeispiel der Erfindung im Sinne der Figuren 23 bis 32 übernimmt demnach die Funktion der Schublade 82 der Haubenmuffe 30 nach dem ersten Ausführungsbeispiel der Erfindung im Sinne der Figuren 1 bis 22.

Wie ebenfalls Figuren 24 und 25 entnommen werden kann, berühren die sich ansonsten parallel zueinander verlaufenden und voneinander beabstandeten Trennwände 86 und 87 in einem unteren Abschnitt zur Bildung des Durchbruchs 55. Der Durchbruch 55 dient wiederum dazu, Lichtwellenleiterfasern von der Vorderseite 40 in den Bereich der Rückseite 41 oder aus dem Bereich der Rückseite 41 in den Bereich der Vorderseite 40 umzulenken.

Einen weiteren Unterschied zwischen den beiden Ausführungsbeispielen betrifft die Ausführung der Leiteinrichtung bzw. Fixiereinrichtung 61 für die Bündeladern. Dies kann insbesondere Figuren 23 bis 25 entnommen werden. Im Unterschied zur Haubenmuffe 30 nach dem ersten Ausführungsbeispiel der Erfindung liegen bei der Haubenmuffe 85 des zweiten Ausführungsbeispiels der Erfindung gemäß Figuren 23 bis 32 von der Leiteinrichtung bzw. Fixiereinrichtung 61 gebildete Führungskanäle bzw. Leitkanäle 89 nicht alle in einer Ebene. Auch enden bzw. münden die Leitkanäle 89 nicht alle im Bereich einer vertikal verlaufenden Schmalseite 43, sondern die Hälfte der Leitkanäle 89 mündet im Bereich einer ersten vertikal verlaufenden Schmalseite 43 und die andere Hälfte der Leitkanäle 89 mündet im Bereich der zweiten vertikal verlaufenden Schmalseite 43. Wie bereits erwähnt, werden nämlich bei der Haubenmuffe 85 nach dem zweiten Ausführungsbeispiel der Erfindung die Lichtwellenleiterfasern im Bereich beider vertikal verlaufenden Schmalseiten 43 seitlich neben den Spleißkassetten 49 nach oben geführt. Insofern ist es für dieses Ausführungsbeispiel vorteilhaft, dass die Leitkanäle 89 auch im Bereich der beiden vertikal verlaufenden Schmalseiten 43 enden.

Um Lichtwellenleiterfasern, die entweder im Bereich der Vorderseite 40 oder im Bereich der Rückseite 41 verlaufen, von den Führungskanälen 52 bzw. 53 im Bereich einer ersten vertikal verlaufenden Schmalseite 43 in den Bereich der Führungskanäle 52 bzw. 53 der zweiten vertikal verlaufenden Schmalseite 43 zu führen, sind beim Ausführungsbeispiel der Figuren 23 bis 32 im Bereich des plattenförmigen Elements 63 sowohl im Bereich der Vorderseite 40 als auch im Bereich der Rückseite 41 jeweils zwei Umlenkzylinder 90 und 91 vorgesehen. Die Umlenkzylinder 90 und 91 können am besten Figur 23 entnommen werden. Lichtwellenleiterfasern, die demnach von einer vertikal verlaufenden Schmalseite 43 in den Bereich der anderen vertikal verlaufenden Schmalseite 43 geführt werden sollen, lassen sich demnach über die Umlenkzylinder 90 und 91 unter Einhaltung der zulässigen minimalen Biegeradien auf einfache Art und Weise sowie schonend hin- und her führen. Es sei noch einmal darauf hingewiesen, dass die Umlenkung von der Vorderseite 40 auf die Rückseite 41 bzw. von der Rückseite 41 auf die Vorderseite 40 über die Durchbrüche 55 erfolgt, die seitlich neben den vertikal verlaufenden Schmalseiten 43 im Bereich der Führungskanäle 52 und 53 angeordnet sind.

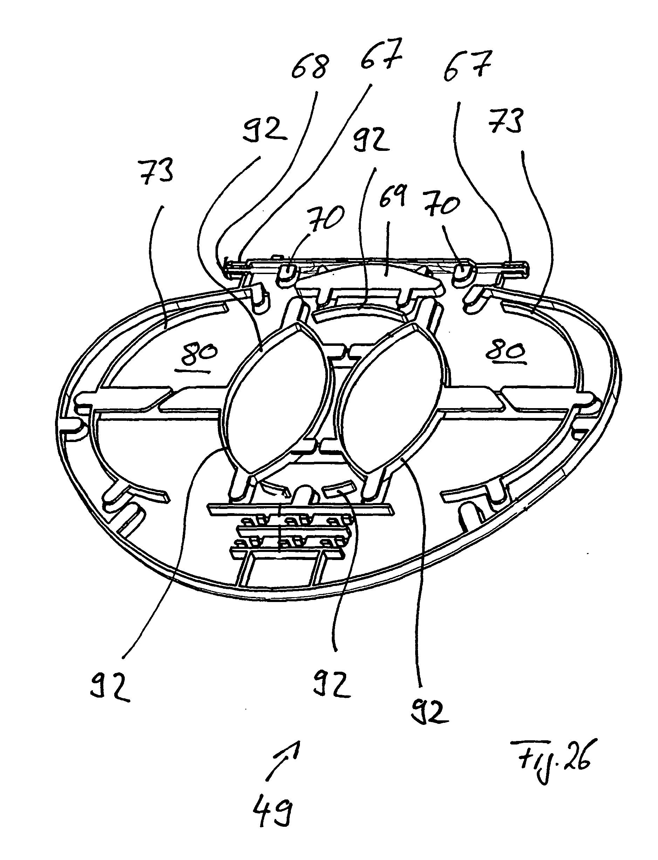

Ein weiterer Unterschied zwischen der Haubenmuffe 30 nach dem ersten Ausführungsbeispiel der Erfindung und der Haubenmuffe 85 nach dem zweiten Ausführungsbeispiel der Erfindung betrifft die konstruktive Ausführung der Spleißkassetten 49. Die Spleißkassetten 49 der Haubenmuffe 85 nach dem zweiten Ausführungsbeispiel der Erfindung sind am deutlichsten in Figuren 24 und 26 gezeigt. Auch die Spleißkassetten 49 der Haubenmuffe 85 nach dem zweiten Ausführungsbeispiel der Erfindung erlauben eine kreisförmige Führung der Lichtwellenleiterfasern in Form von drei ineinander verschachtelten sowie einander überlappenden Kreisführungen, wie dies beim ersten Ausführungsbeispiel im Zusammenhang mit Figur 13 erläutert worden ist. Ein Unterschied zwischen den Spleißkassetten ist jedoch in der Ausführung bzw.

Ausgestaltung der Führungsrippen zu sehen. So verfügt die Spleißkassette 49 des zweiten Ausführungsbeispiels der Erfindung wiederum über zwei äußere halbkreisförmige sowie stegartige Führungsrippen 73, auf die flächig ausgebildeten Führungsrippen 74 wurde jedoch verzichtet. Vielmehr liegen im mittleren Abschnitt der Spleißkassette 49 des zweiten Ausführungsbeispiels stegartige Führungsrippen 92 vor. Die stegartigen Führungsrippen 92 definieren ebenso wie die stegartigen Führungsrippen 73 abschnittsweise ein Kreissegment. Bei den Spleißkassetten 49 des zweiten Ausführungsbeispiels der Erfindung wird jedoch auf Führungskanäle zwischen den im mittleren Bereich der Spleißkassette 49 angeordneten Führungsrippen 92 verzichtet.

Dies ist im Hinblick auf die Führung der Lichtwellenleiterfasem vorteilhaft. Weiterhin ergibt sich durch die stegartige Ausbildung der Führungsrippen 92 im mittleren Bereich der Spleißkassette 49 eine Materialersparnis und damit Gewichtsreduzierung.

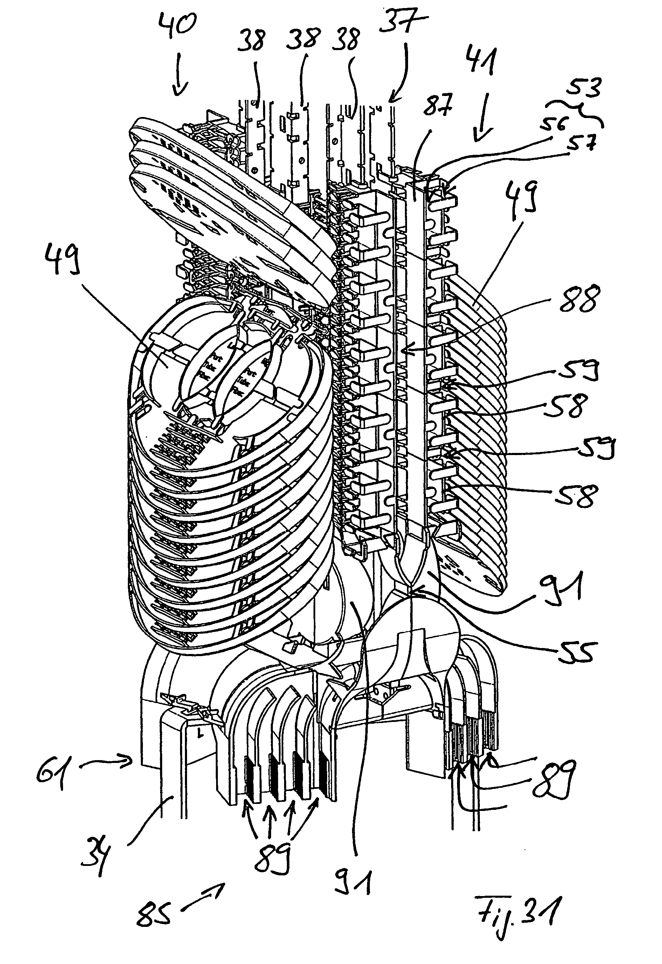

Ein weiterer die Spleißkassette betreffender Unterschied zwischen den beiden Ausführungsbeispielen zeigt Figur 31. So kann Figur 31 genommen werden, dass Spleißkassetten 49 unterschiedlicher Dicke verwendet werden können. So verfügen gemäß Figur 31 die Spleißkassetten 49 im Bereich der Vorderseite 40 über eine doppelte Dicke wie die Spleißkassetten 49 im Bereich der Rückseite 41 der Haubenmuffe 85. In den Spleißkassetten 49 mit doppelter Dicke bzw. Höhe können eine größere Anzahl von Spleißverbindungen abgelegt werden. Es ist eine Besonderheit des Konstruktionsprinzips der hier vorliegenden Erfindung, dass Spleißkassetten unterschiedlicher Dicke bzw. Höhe auf einfache Art und Weise ausgetauscht werden können, ohne weitere konstruktive Änderungen an der Muffe vorzunehmen. Werden Spleißkassetten 49 mit doppelter Dicke bzw. Höhe verwendet, so wird lediglich jede zweite Halterung 48 für die Spleißkassetten 49 verwendet. Zwei Halterungen 48, die in gleicher Höhe einander gegenüber liegen, bilden dann wiederum eine Drehachse für die Spleißkassette 49. Die unmittelbar oberhalb sowie unterhalb der eine Drehachse bildenden Halterungen 48 positionierten Halterungen bleiben bei Verwendung einer Spleißkassette 49 mit doppelter Höhe bzw. Dicke frei. Es müssen demnach keine konstruktiven Änderungen an den Halterungen für die Spleißkassetten vorgenommen werden.

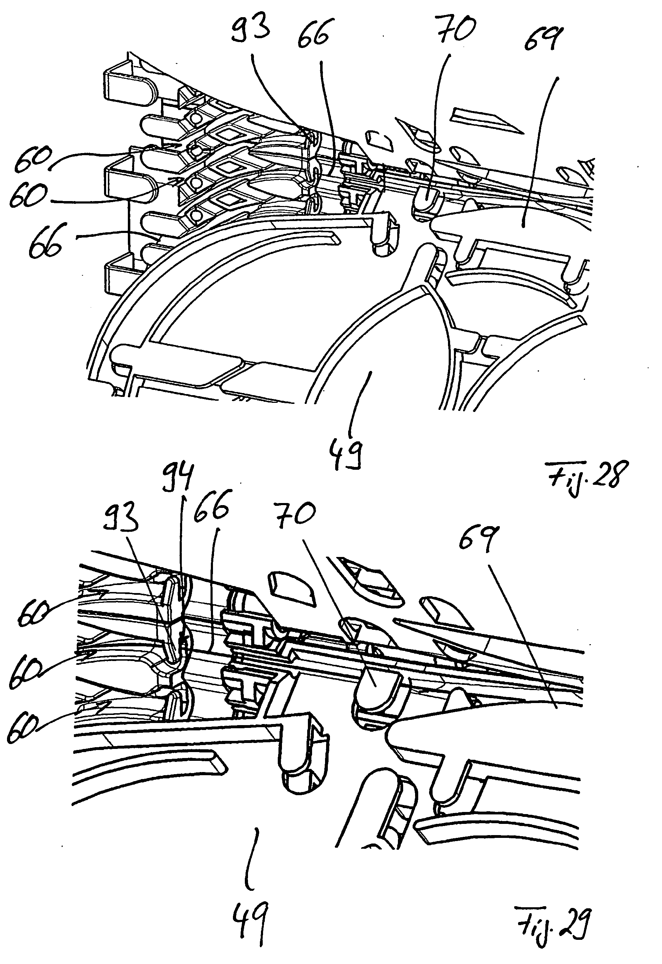

Ein weiterer Unterschied zwischen den beiden Ausführungsbeispielen der hier vorliegenden Erfindung betrifft die Sicherung der in die zylindrischen Achskörper 67 der Spleißkassetten 49 eingelegten Lichtwellenleiterfasern 66 vor dem Herausspringen derselben aus den zylindrischen Achskörpern 67 bei einer Schwenkbewegung der Spleißkassetten 49. So sind in Übereinstimmung mit dem ersten Ausführungsbeispiel gemäß Figuren 1 bis 22 auch beim zweiten Ausführungsbeispiel gemäß Figuren 23 bis 32 wiederum die Führungsstege 69 und 70 in die Spleißkassette 49 integriert. Dies kann am deutlichsten Figuren 28 bis 30 entnommen werden. Beim zweiten Ausführungsbeispiel gemäß Figuren 23 bis 32 sind jedoch die Führungskanäle 52 und 53 und damit die außenliegenden Teilführungskanäle 57 zur Bildung des Aufnahmeraums 88 nach außen versetzt, so dass die beim ersten Ausführungsbeispiel gemäß Figuren 1 bis 22 beschriebene Funktion des Führungsstegs 72 im Bereich des außenliegenden Teilführungskanals 57 nicht mehr wirksam ist. Um dies auszugleichen, sind beim zweiten Ausführungsbeispiel gemäß Figuren 23 bis 32 im Bereich der gekrümmt verlaufenden Führungskanäle 60, nämlich benachbart zu den Halterungen 48 für die Achskörper 67 der Spleißkassetten 49, Führungsrippen 93 vorgesehen. Die Führungsrippen 93 sind am deutlichsten in Figur 29 gezeigt. Die Führungsrippen 93 stehen wechselweise nach oben oder nach unten vor, wobei die Lichtwellenleiterfasern 66 in einer nutartigen Ausnehmung 94 innerhalb der Führungsrippen 93 geführt sind. Wird demnach die Spleißkassette 49 verdreht, so verbleibt die Lichtwellenleiterfaser 66 stets innerhalb der Ausnehmung 94 und liegt demnach stets an der Führungsrippe 93 stetig an. Ein Herausspringen der Lichtwellenleiterfaser 66 aus der Öffnung 68 innerhalb des Achskörpers 67 wird damit vermieden.

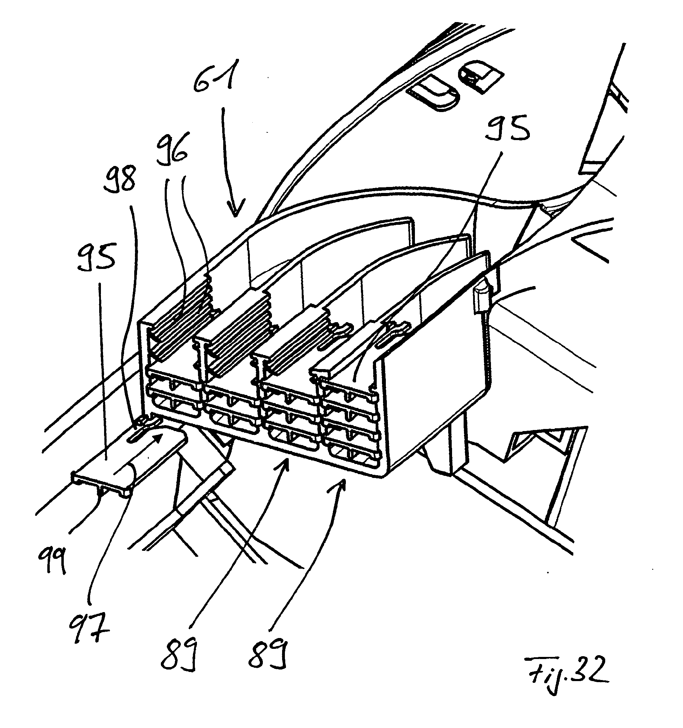

Ein weiteres Detail der hier vorliegenden Erfindung, welches sowohl beim Ausführungsbeispiel gemäß Figuren 1 bis 22 als auch beim Ausführungsbeispiel gemäß Figuren 23 ff. verwendet werden kann, zeigt Figur 32. So zeigt Figur 32 vier nebeneinander liegende Führungskanäle 89 im Bereich der Leiteinrichtung bzw. Fixiereinrichtung 61 für die Bündeladern. Im Sinne des Details gemäß Figur 32 und dem Unterschied zu der im Zusammenhang mit dem ersten Ausführungsbeispiel gemäß Figuren 1 bis 22 erläuterten Befestigung der Bündeladern über Kabelbinder, erfolgt hier die Fixierung der Bündeladern im Bereich der Führungskanäle 89 über Halteplatten 95. Wie Figur 32 entnommen werden kann, sind im Bereich der Führungskanäle 89 Führungsschienen 96 vorgesehen, in welche die Halteplatten 95 eingeschoben werden können. Das Einschieben der Halteplatten 95 in die Führungsschienen 96 erfolgt im Sinne des Pfeils 97. Wie Figur 32 entnommen werden kann, ist in die Halteplatte 95 eine schlitzartige Ausnehmung eingebracht. Wird die Halteplatte 95 in Richtung des Pfeils 97 in die entsprechenden Führungsschienen 96 eingeschoben, so wird ein von dem Schlitz bzw. der Ausnehmung begrenztes widerhakenartiges Verankerungselement 98 nach innen gedrückt, wobei dann, wenn die Halteplatte 95 vollständig in die Führungsschienen 96 eingeschoben worden ist, das Verankerungselement 98 wieder in seine ursprüngliche Position zurückschnappt und so die Halteplatte 95 in den Führungskanälen 89 fixiert. Erfindungsgemäß ist eine Seite der Halteplatten 95 glatt ausgebildet, wohingegen auf der gegenüberliegenden Seite der Halteplatte 95 ein Trennsteg 99 vorgesehen ist. Eine Halteplatte 99 dient demnach der Fixierung von zwei Bündeladern in den Führungskanälen 89, wobei zu jeder Seite des Trennstegs 99 jeweils eine Bündelader angeordnet wird. Sollen bei der in Figur 32 gezeigten Anordnung zwei neue Bündeladern in den Führungskanälen 89 fixiert werden, so werden die Bündeladem zuerst auf der glatten Seite einer bereits eingeführten Halteplatte 95 abgelegt und sodann wird eine neue Halteplatte 95 in die entsprechenden Führungsschienen 96 eingeschoben. Weiterhin sei angemerkt, dass eine axiale Verschiebung der Bündeladern bei der in Figur 32 gezeigten Fixierung derselben möglich ist.

### Bezugszeichenliste

- 30: Haubenmuffe
- 31: Dichtungskörper
- 32: Öffnung
- 33: Bügel
- 34: Schenkel
- 35: Ausnehmung
- 36: Schenkel
- 37: Rahmen
- 38: Rahmenteil
- 39: Rahmenteil
- 40: Vorderseite
- 41: Rückseite
- 42: Schmalseite
- 43: Schmalseite
- 44: Schenkel
- 45: Schenkel
- 46: Öffnung
- 47: Öffnung
- 48: Halterung
- 49: Spleißkassette
- 50: Faserführungselement
- 51: Verankerungselement
- 52: Führungskanal
- 53: Führungskanal
- 54: Trennwand
- 55: Durchbruch
- 56: Teilführungskanal
- 57: Teilführungskanal
- 58: Trennsteg
- 59: Durchbruch
- 60: Führungskanal
- 61: Fixiereinrichtung
- 62: Leitkanal
- 63: Element
- 64: Anschlag
- 65: Bündelader
- 66: Lichtwellenleiterfaser
- 67: Achsköper
- 68: Öffnung
- 69: Führungssteg
- 70: Führungssteg
- 71: Innenwand
- 72: Führungssteg
- 73: Führungsrippe
- 74: Führungsrippe
- 75: Führungskanal
- 76: Kreisführung
- 77: Kreisführung
- 78: Kreisführung
- 79: Kreisführung
- 80: Stauraum
- 81: Spleißstelle
- 82: Schublade
- 83: Betätigungsgriff
- 84: Führung
- 85: Haubenmuffe
- 86: Trennwand
- 87: Trennwand
- 88: Aufnahmeraum
- 89: Leitkanal
- 90: Umlenkzylinder
- 91: Umlenkzylinder
- 92: Führungsrippe
- 93: Führungsrippe
- 94: Ausnehmung
- 95: Halteplatte
- 96: Führungsschiene
- 97: Pfeil
- 98: Verankerungselement
- 99: Trennsteg

## Patentansprüche

1. Vorrichtung zur strukturierten Ablage bzw. Handhabung von Lichtwellenleitern, insbesondere Kabelmuffe, mit einem Rahmen (37) und mit mehreren Spleißkassetten (49), wobei an einer Vorderseite (40) und an einer Rückseite (41) des Rahmens (37) jeweils mehrere Spleißkassetten (49) übereinander angeordnet und schwenkbar an dem Rahmen (37) befestigt sind, **dadurch gekennzeichnet, dass** an mindestens einer vertikal verlaufenden Schmalseite (43) des Rahmens (37) Faserführungselemente (50) für Lichtwellenleiterfasern (66) befestigt sind, derart, dass die Lichtwellenleiterfasern (66) im Bereich der oder jeder Schmalseite (43) seitlich neben den Spleißkassetten (49) und dem Rahmen (37) geführt sind, wobei die im Bereich der oder jeder Schmalseite (43) angeordneten Faserführungselemente (50) mindestens zwei vertikal verlaufende Führungskanäle (52, 53) für Lichtwellenleiterfasern (66) bilden, wobei ein erster Führungskanal (52) der Vorderseite (40) des Rahmens (37) und ein zweiter Führungskanal (53) der Rückseite (41) des Rahmens (37) zugeordnet ist, wobei die beiden Führungskanäle (52, 53) durch mindestens eine vertikal verlaufende Trennwand (54) räumlich voneinander getrennt sind, und wobei die oder jede Trennwand (54) in einem unteren Abschnitt derselben einen Durchbruch (55) aufweist, sodass die Lichtwellenleiterfasern (66) von dem ersten Führungskanal (52) in den zweiten Führungskanal (53) und damit von der Vorderseite (40) des Rahmens (37) zur Rückseite (41) des Rahmens (37) umgeleitet werden können.

2. Vorrichtung nach Anspruch 1, **dadurch gekennzeichnet, dass** die Faserführungselemente (50) ausschließlich an einer vertikal verlaufenden Schmalseite (43) des Rahmens (37) befestigt sind, und dass die Lichtwellenleiterfasern (66) ausschließlich im Bereich dieser einen Schmalseite (43) seitlich neben den Spleißkassetten (49) geführt sind.

3. Vorrichtung nach Anspruch 1, **dadurch gekennzeichnet, dass** die Faserführungselemente (50) an beiden vertikal verlaufenden Schmalseiten (43) des Rahmens (37) befestigt sind, und dass die Lichtwellenleiterfasern (66) im Bereich dieser beiden Schmalseiten (43) seitlich neben den Spleißkassetten (49) geführt sind.

4. Vorrichtung nach einem oder mehreren der Ansprüche 1 bis 3, **dadurch gekennzeichnet, dass** die Führungskanäle (52, 53) in jeweils zwei Teilführungskanäle (56, 57) unterteilt sind, derart, dass sich im Bereich der Vorderseite (40) des Rahmens (37) und im Bereich der Rückseite (41) des Rahmens (37) jeweils mindestens zwei vertikal verlaufende Teilführungskanäle (56, 57) erstrecken, nämlich jeweils mindestens ein innenliegender Teilführungskanal (56) und mindestens ein außenliegender Teilführungskanal (57).

5. Vorrichtung nach Anspruch 4, **dadurch gekennzeichnet, dass** die beiden innenliegender Teilführungskanäle (56), von denen ein erster im Bereich der Vorderseite (40) des Rahmens (37) und ein zweiter im Bereich der Rückseite (41) des Rahmens (37) verläuft, durch die oder jede Trennwand (54) voneinander getrennt sind.

6. Vorrichtung nach Anspruch 4 oder 5, **dadurch gekennzeichnet, dass** die im Bereich der Vorderseite (40) und die im Bereich der Rückseite (41) des Rahmens (37) verlaufenden Teilführungskanäle, also der innenliegende Teilführungskanal (56) und der außenliegende Teilführungskanal (57), durch mehrere voneinander beabstandete Trennstege (58) voneinander getrennt sind, wobei zwischen zwei benachbarten Trennstegen (58) jeweils ein Durchbruch (59) ausgebildet ist, derart, dass die Lichtwellenleiterfasern (66) im Bereich der Vorderseite (40) und im Bereich der Rückseite (41) des Rahmens (37) von dem innenliegenden Teilführungskanal (56) in den außenliegenden Teilführungskanal (57) umgeleitet werden können.

7. Vorrichtung nach einem oder mehreren der Ansprüche 1 bis 6, **dadurch gekennzeichnet, dass** die im Bereich der oder jeder Schmalseite (43) angeordneten Faserführungselemente (50) ebenfalls gekrümmte Führungskanäle (60) bilden, wobei einzelne Lichtwellenleiterfasern (66) durch die gekrümmten Führungskanäle (60) den Spleißkassetten (49) zuführbar sind.

## Claims

1. Device for the structured storage or handling of optical waveguides, especially a cable sleeve, with a frame (37) and with a number of splice cases (49), a number of splice cases (49) being respectively arranged one above the other on a front side (40) and on a rear side (41) of the frame (37) and pivotably fastened to the frame (37), **characterised in that** fiber guiding elements (50) for optical fibers (66) are fastened at least to one vertically running narrow side (43) of the frame (37) in such a way that the optical fibers (66) are guided laterally next to the splice cases (49) or laterally next to the frame (37) in the region of the or each narrow side (43), the fibre guiding elements (50) arranged in the region of the or each narrow side (43) forming at least two vertically running guiding channels (52, 53) for optical fibres (66), a first guiding channel (52) being assigned to the front side (40) of the frame (37) and a second guiding channel (53) being assigned to the rear side (41) of the frame (37), the two guiding channels (52, 53) being spatially separated from one another by at least one vertically running separating wall (54), and the or each separating wall (54) having an aperture (55) in a lower portion of the same, so that the optical fibres (66) can be diverted from the first guiding channel (52) into the second guiding channel (53), and consequently from the front side (40) of the frame (37) to the rear side (41) of the frame (37)

2. Device according to Claim 1, **characterised in that** the fibre guiding elements (50) are fastened exclusively to one vertically running narrow side (43) of the frame (37), and **in that** the optical fibres (66) are guided laterally next to the splice cases (49) exclusively in the region of this one narrow side (43).

3. Device according to Claim 1, **characterised in that** the fibre guiding elements (50) are fastened to both vertically running narrow sides (43) of the frame (37), and **in that** the optical fibres (66) are guided laterally next to the splice cases (49) in the region of these two narrow sides (43).

4. Device according to one or more of Claims 1 to 3, **characterised in that** the guiding channels (52, 53) are subdivided into two guiding channel compartments (56, 57) in each case in such a way that at least two vertically running guiding channel compartments (56, 57) respectively extend in the region of the front side (40) of the frame (37) and in the region of the rear side (41) of the frame (37), to be specific in each case at least one inner guiding channel compartment (56) and at least one outer guiding channel compartment (57).

5. Device according to Claim 4, **characterised in that** the two inner guiding channel compartments (56), of which a first runs in the region of the front side (40) of the frame (37) and a second runs in the region of the rear side (41) of the frame (37), are separated from one another by the or each separating wall (54).

6. Device according to Claim 4 or 5, **characterised in that** the guiding channel compartments running in the region of the front side (40) and in the region of the rear side (41) of the frame (37), that is the inner guiding channel compartment (56) and the outer guiding channel compartment (57), are separated from each other by a number of separating webs (58) spaced apart from one another, an aperture (59) respectively being formed between two neighboring separating webs (58) in such a way that the optical fibers (66) in the region of the front side (40) and in the region of the rear side (41) of the frame (37) can be diverted from the respective inner guiding channel compartment (56) into the respective outer guiding channel compartment (57).

7. Device according to one or more of Claims 1 to 6, **characterised in that** the fibre guiding elements (50) arranged in the region of the or each narrow side (43) form likewise curved guiding channels (60), it being possible for individual optical fibers (66) to be fed to the splice cases (49) through the curved guiding channels (60).

## Revendications

1. Dispositif de dépose structurée ou de manipulation de guides d'ondes lumineuses, notamment manchon de câble, comprenant un cadre (37) et plusieurs cassettes d'épissure (49), plusieurs cassettes d'épissure (49) étant respectivement disposées les unes au-dessus des autres sur un côté avant (40) et sur un côté arrière (41) du cadre (37) et étant fixées au cadre (37) de manière à pouvoir pivoter, **caractérisé en ce que** des éléments de guidage des fibres (50) pour des fibres optiques (66) sont fixés à au moins un côté étroit (43) au tracé vertical du cadre (37) de telle sorte que les fibres optiques (66) passent dans la zone du ou de chaque côté étroit (43) latéralement à côté des cassettes d'épissure (49) et du cadre (37), les éléments de guidage des fibres (50) qui sont disposés dans la zone du ou de chaque côté étroit (43) formant au moins deux canaux de guidage (52, 53) au tracé vertical pour les fibres optiques (66), un premier canal de guidage (52) étant affecté au côté avant (40) du cadre (37) et un deuxième canal de guidage (53) au côté arrière (41) du cadre (37), les deux canaux de guidage (52, 53) étant séparés l'un de l'autre dans l'espace par au moins une paroi de séparation (54) s'étendant dans le sens vertical et la ou chaque paroi de séparation (54) présentant dans une section inférieure de celle-ci une traversée (55) de sorte que les fibres optiques (66) puissent être déviées du premier canal de guidage (52) dans le deuxième canal de guidage (53) et ainsi du côté avant (40) du cadre (37) vers le côté arrière (41) du cadre (37).

2. Dispositif selon la revendication 1, **caractérisé en ce que** les éléments de guidage des fibres (50) sont exclusivement fixés sur un côté étroit (43) au tracé vertical du cadre (37) et que les fibres optiques (66) passent latéralement à côté des cassettes d'épissure (49) exclusivement dans la zone de ce côté étroit (43).

3. Dispositif selon la revendication 1, **caractérisé en ce que** les éléments de guidage des fibres (50) sont fixés sur les deux côtés étroits (43) au tracé vertical du cadre (37) et que les fibres optiques (66) passent latéralement à côté des cassettes d'épissure (49) dans la zone de ces deux côtés étroits (43).

4. Dispositif selon l'une ou plusieurs des revendications 1 à 3, **caractérisé en ce que** les canaux de guidage (52, 53) sont respectivement divisés en deux canaux de guidage partiels (56, 57) de telle sorte qu'au moins deux canaux de guidage partiels (56, 57) au tracé vertical s'étendent dans la zone du côté avant (40) du cadre (37) et dans la zone du côté arrière (41) du cadre (37), à savoir respectivement au moins un canal de guidage partiel intérieur (56) et au moins un canal de guidage partiel extérieur (57).

5. Dispositif selon la revendication 4, **caractérisé en ce que** les deux canaux de guidage partiels intérieurs (56), dont un premier passe dans la zone du côté avant (40) du cadre (37) et un deuxième dans la zone du côté arrière (41) du cadre, sont séparés l'un de l'autre par la ou par chaque paroi de séparation (54).

6. Dispositif selon la revendication 4 ou 5, **caractérisé en ce que** les canaux de guidage partiels qui s'étendent dans la zone du côté avant (40) et dans la zone du côté arrière (41) du cadre (37), c'est-à-dire le canal de guidage partiel intérieur (56) et le canal de guidage partiel extérieur (57), sont séparés l'un de l'autre par plusieurs nervures de séparation (58) espacées les une des autres, une traversée (59) étant à chaque fois formée entre deux nervures de séparation (58) voisines de telle sorte que les fibres optiques (66) puissent être déviées du canal de guidage partiel intérieur (56) dans le canal de guidage partiel extérieur (57) dans la zone du côté avant (40) et dans la zone du côté arrière (41) du cadre (37).

7. Dispositif selon l'une ou plusieurs des revendications 1 à 6, **caractérisé en ce que** les éléments de guidage des fibres (50) disposés dans la zone du ou de chaque côté étroit (43) forment également des canaux de guidage courbés (60), les fibres optiques (66) individuelles pouvant être acheminées par le biais des canaux de guidage courbés (60) aux cassettes d'épissure (49).
